# EUROPÄISCHE PATENTSCHRIFT

(11) **EP 0 962 143 B1**
(45) Veröffentlichungstag und Bekanntmachung des Hinweises auf die Patenterteilung: **25.06.2003**
(21) Anmeldenummer: 99106891.7
(22) Anmeldetag: 08.04.1999
(51) Int. Cl.: A22C 11/02

(54) **Vorrichtung zum Herstellen von Würsten**
Device for manufacturing sausages
Dispositif pour la fabrication de saucisses

(30) Priorität: 04.06.1998 DE 19824980
(43) Veröffentlichungstag der Anmeldung: 08.12.1999
(73) Patentinhaber: Poly-clip System GmbH & Co. KG, 60489 Frankfurt am Main (DE)
(72) Erfinder: Töpfer, Klaus, 64572 Büttelborn (DE)
(74) Vertreter: Eisenführ, Speiser & Partner

(56) Entgegenhaltungen:
- EP-A- 0 016 500
- EP-A- 0 123 932
- EP-B- 0 379 125
- DE-A- 19 519 394
- DE-A- 19 644 074
- DE-C- 19 646 721
- GB-A- 2 077 244
- US-A- 4 847 951
- US-A- 4 914 784

## Beschreibung

Die Erfindung betrifft eine Vorrichtung zum Herstellen von mit Füllgut befüllten Verpackungen, insbesondere Würsten, durch Befüllen und anschließendes Verschließen schlauch- oder beutelförmiger Wursthüllen, mit
- einer Füllmaschine, die mindestens ein Füllrohr mit einer Mündung aufweist, auf das eine Wursthülle aufgezogen werden und durch das Füllgut geleitet werden kann, um die Wursthülle zu befüllen,
- einer Verschließmaschine zum Verschließen befüllter Wursthüllen oder Wursthüllenabschnitte, die bezogen auf den Füllgutstrom im Füllrohr stromab der Mündung des Füllrohres angeordnet ist,
- einem Resthüllenentferner zum Entfernen des unbefüllten Restes einer Wursthülle aus der Füll- und/oder der Verschließmaschine,
- einem Magazin für unbefüllte Wursthüllen, und
- Mittel zum Entnehmen einer unbefüllten Wursthülle aus dem Magazin und zum Aufziehen derselben auf das Füllrohr,
wobei zwischen der Verschließmaschine und der Füllmaschine eine Daten- oder Signalleitung zur Übernahme von Betriebsparametem vorgesehen ist.

Pastöses Füllgut in schlauch- oder beutelförmige Verpackungen zu füllen, ist seit langem bekannt. Solche Verpackungen - unabhängig von der Art des Füllguts - werden im folgenden als Würste bezeichnet und die schlauch- oder beutelförmigen Verpackungshüllen als Wursthüllen. Das Füllgut selbst ist zwar beim Befüllen pastös, kann jedoch später auch aushärten, wie dies beispielsweise bei Dauerwürsten der Fall ist.

Zum Herstellen solcher Würste dienen Füllmaschinen, die mit Verschließmaschinen zusammenarbeiten. Die Füllmaschinen besitzen in der Regel ein Füllrohr, auf das eine einseitig verschlossene Wursthülle so aufgezogen ist, daß sich das verschlossene Ende der Wursthülle vor der Mündung des Füllrohres befindet. Bei schlauchförmigen Verpackungshüllen ist die Länge der Wursthülle in der Regel so bemessen, daß sie für das Herstellen einer Vielzahl von Würsten ausreicht. Um eine möglichst große Wursthüllenlänge auf dem Füllrohr aufziehen zu können, ist die Wursthülle auf dem Füllrohr zur Raupe gestaucht. Die Wursthülle ist gestreckt beispielsweise 15 - 60 m lang und nimmt auf dem Füllrohr eine Länge von 40 - 45 cm ein, da sie zu einer Raupe zusammengestaucht ist. Lediglich beutelförmige Wursthüllen werden zum Herstellen jeweils einer Wurst einzeln auf das Füllrohr aufgezogen.

An seinem mündungsnahen Ende ist das Füllrohr von einer Darmbremse umgeben, die dem Abziehen der Wursthülle von dem Füllrohr entgegenwirkt, indem sie die Wursthülle mit einer einstellbaren Kraft bremst. Dies kann beispielsweise dadurch geschehen, daß die Darmbremse die Wursthülle mit einer einstellbaren Kraft auf die Mantelfläche des Füllrohres drückt.

Vor der Mündungsöffnung des Füllrohres befindet sich eine Verschließmaschine, mit der die Wursthülle zu einem Zopf zusammengerafft und auf diese Weise eingeschnürt werden kann, um die Wursthülle anschließend im Bereich der Einschnürung durch Setzen von Verschlußklammern zu verschließen. Dazu weist die Verschließmaschine einen Verdränger und eine Clipeinrichtung auf. Bekannt sind beispielsweise Spreiz- oder Klappenverdränger sowie Clipeinrichtungen, die mit Stempeln und Matrizen zum Setzen und Verschließen von Verschlußklammern arbeiten.

Das Herstellen von Würsten mit derartigen Füll- und Verschließmaschinen geschieht dadurch, daß pastöses Füllgut durch das Füllrohr hindurch und aus dessen Mündung heraus in die einseitig verschlossene Wursthülle gepreßt wird. Bei diesem Befüllen der Wursthülle wird ständig weitere Wursthülle von dem Füllrohr abgezogen, und zwar gegen die von der Darmbremse hervorgerufene Bremskraft. Diese Bremskraft muß von dem in Füllrohr und Wursthülle herrschenden Fülldruck überwunden werden. Dieser Fülldruck beeinflußt auch den später in der fertigen Wurst herrschenden Innendruck.

Sobald die Wursthülle in dem für eine Wurst ausreichenden Maße befüllt ist, tritt die Verschließmaschine in Aktion. Deren Verdränger schnürt die Wursthülle zunächst ein, indem der Verdränger von zwei gegenüberliegenden Seiten in die Wursthülle greift. Im Falle eines Spreizverdrängers geschieht dies durch Schließen zweier Verdrängerscheren. Die beiden Verdrängerscheren werden nach dem Schließen in Längsrichtung des Füllrohres voneinander weg bewegt, so daß zwischen den beiden Verdrängerscheren ein füllgutfreier Wursthüllenzopf entsteht, dessen Länge ausreicht, um mit zwei Verschlußklammern verschlossen zu werden. Diese zwei Verschlußklammern werden von der Clipeinrichtung nebeneinander auf den füllgutfreien Wursthüllenzopf gesetzt und verschlossen. Anschließend wird der Zopf zwischen beiden Verschlußklammern durchtrennt. Die befüllte und beidseitig verschlossene Wurst ist dann von der übrigen Wursthülle getrennt. Der Zyklus des Befüllens und Verschließens kann nun für die nächste Wurst beginnen.

Derartige Füll- und Verschließmaschinen samt ihrer Bestandteile wie Füllrohr, Darmbremse, Verdränger oder Clipeinrichtung sind bereits aus vielen Veröffentlichungen bekannt. Besonders vorteilhaft ist eine Verschließmaschine, bei der die verschiedenen Bewegungsabläufe für einen Spreizverdränger und eine Clipeinrichtung einzeln steuerbar sind. Eine derartige Vorrichtung ist in der deutschen Offenlegungsschrift 196 44 074 beschrieben.

Wichtige Parameter der fertig hergestellten Würste sind ihr Füllgewicht und ihre Prallheit. Die Prallheit einer Wurst hängt von ihrem Innendruck ab. Dieser muß bei solchen Würsten, die mit Wurstbrät gefüllt sind, so groß sein, daß sich das im Wurstbrät enthaltene Fleischwasser nicht sammeln und gelieren kann. Die Prallheit einer Wurst läßt sich über den Fülldruck in der vorbeschriebenen Weise mit der Darmbremse einstellen. Bei einem Spreizverdränger kann der Fülldruck auch dadurch beeinflußt werden, daß beim Spreizen der Verdrängerscheren die Wursthülle durch die füllrohrnähere Verdrängerschere nachgezogen wird oder nicht. Im letzteren Falle wird die füllgutumgebene einseitig verschlossene Verpackungshülle dadurch verkürzt, daß ein Teil der Verpackungshülle durch die füllrohrferne Verdrängerschere zurückgezogen wird und den füllgutfreien Zopf bildet. Dadurch steigt die Prallheit der Wurst. Um durch ausreichende Prallheit die Qualität der Würste sicherzustellen und um Produktionsfehler, wie geplatzte Wursthüllen, sofort erkennen zu können, ist eine Vorrichtung zum Erfassen der Prallheit der hergestellten Wurst vorteilhaft, wie sie in der deutschen Patentschrift 196 46 721 beschrieben ist. Eine Gewichtskontrolle insbesondere bei Würsten, die aus einer Wursthülle hergestellt werden, die schon vor dem Befüllen mit Aufdrucken für die einzelnen Würste versehen ist, kann mit Hilfe einer Vorrichtung geschehen, wie sie aus der deutschen Offenlegungsschrift 195 19 394 bekannt ist.

Wie bereits erwähnt, reicht die auf das Füllrohr aufgezogene Wursthülle regelmäßig zum Herstellen einer Vielzahl von Würsten. Ist die gesamte Wursthülle auf dem Füllrohr verbraucht, schalten Füll- und Verschließmaschine die Wurstproduktion automatisch ab. Es muß dann eine neue unbefüllte Wursthülle auf das Füllrohr aufgezogen werden. Da das Ende des Füllrohres beim Herstellen von Würsten üblicherweise in die Verschließmaschine hineinragt, muß letztere zum Aufziehen einer neuen Wursthülle auf das Füllrohr zunächst seitlich weggeschwenkt werden. Zusammen mit der Verschließmaschine wird auch die Darmbremse seitlich weggeschwenkt. Das Aufziehen einer neuen Wursthülle ist dann ohne Schwierigkeiten möglich. Anschließend werden Darmbremse und Verschließmaschine wieder herangeschwenkt. Ist das Ende der frisch aufgezogenen Wursthülle bereits verschlossen, schiebt sich die Darmbremse leicht über die Wursthülle auf dem Füllrohr, ohne daß die Wursthülle dabei zurückgezogen wird. Durch den Fülldruck beim ersten Befüllen wird das verschlossene Ende zwischen den Verdrängerklappen oder -scheren der Verschließmaschine hindurchgeschoben.

Falls auf das Füllrohr beidseitig offener Naturdarm aufgezogen wird, muß dessen offenes Ende zunächst durch die Darmbremse hindurch und in die Verschließmaschine eingefädelt werden. Dem dient eine Vorrichtung, die in der deutschen Patentanmeldung 197 16 665 beschrieben ist und das Einfädeln mittels einer Gasoder Flüssigkeitsstrahl-Düse bewirkt. Von der Verschließmaschine wird das zunächst offene Ende des Naturdarms dann verschlossen, und die Herstellung von Würsten kann in der beschriebenen Weise beginnen.

Damit beim Plazieren einer neuen unbefüllten Wursthülle möglichst wenig der wertvollen Produktionszeit verloren geht, sind Füllmaschinen mit sogenannten Zwillings-Systemen, die zwei Füllrohre aufweisen, bekannt. Die Füllrohre sind derart in der Füllmaschine angebracht, daß ihre Positionen vertauscht werden können. Nur eines der beiden Füllrohre befindet sich jeweils in einer Füllposition, in der es dem Herstellen von Würsten auf die vorbeschriebene Weise dient. Das andere Füllrohr befindet sich in einer Warteposition, und kann in dieser leicht mit einer neuen unbefüllten Wursthülle versehen werden. Ist die Wursthülle auf dem Füllrohr in der Füllposition verbraucht, werden zunächst Verschließmaschine und Darmbremse von dem Füllrohr weggeschwenkt und anschließend wird die Position der beiden Füllrohre durch Schwenken vertauscht, so daß sich das Füllrohr mit der neuen und unbefüllten Wursthülle in der Füllposition befindet. Verschließmaschine und Darmbremse können dann wieder herangeschwenkt werden. Dieser Vorgang nimmt nur 5 - 7 Sekunden in Anspruch.

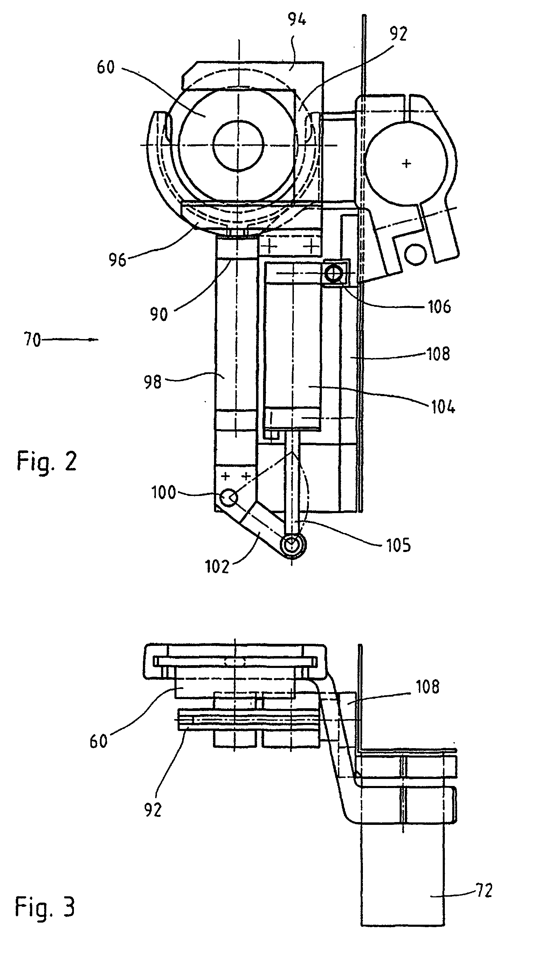

Eine Vorrichtung der eingangs angegebenen Art ist aus der EP-B-0 379 125 bekannt. Mit dieser und mit Hilfe des von ihr ausgeübten Verfahrens ist es möglich, die Herstellung von Würsten mittels konventioneller Steuerung der Abfüll- und Verschließmaschine (Fig. 3 und Spalten 11 - 14) weitgehend zu automatisieren. Dennoch besteht ein Bedarf nach weiterer Automatisierung, insbesondere im Sinne einer produktabhängigen Optimierung.

Diesen Bedarf zu decken, ist das Ziel der vorliegenden Erfindung.

Dieses Ziel wird, ausgehend vom vorerwähnten Stand der Technik, erfindungsgemäß erreicht durch eine Überwachungseinrichtung, mit der mindestens ein Parameter einer hergestellten Verpackung (wie deren Gewicht oder deren Prallheit) erfasst werden kann, und durch mindestens eine Steuereinrichtung, die an die Überwachungseinrichtung sowie die Füll- und/oder die Verschließmaschine angeschlossen und so ausgeführt ist, dass sie im Falle einer Abweichung eines oder mehrerer der von der Überwachungseinrichtung erfassten Parameter von entsprechenden Sollwerten eine Veränderung eines oder mehrerer der Betriebsparameter (wie Taktzeit, Füllgewicht oder Durchmesser und Füllgeschwindigkeit) der Füll- und/oder Verschließmaschine bewirkt oder diese abschaltet.

Dieser Lösungsvorschlag beruht auf der Erkenntnis, dass ein komplexer Zusammenhang zwischen den produktspezifischen Parametern und den Betriebsparametern der Maschine mit ihren aufeinander folgenden und teilweise ineinander greifenden Arbeitsvorgängen besteht. Nicht nur müssen die vorgegebenen Sollwerte sehr unterschiedlicher Produkte - bei Würsten unterschiedliche Längen, unterschiedliche Dicken, unterschiedliches Gewicht etc. - überwacht und durch Regelungs-Feedback eingehalten werden, sondern die Produkt-Unterschiedlichkeiten können erfindungsgemäß auch zur Veränderung zahlreicher Betriebsparameter herangezogen werden, um zum einen den Verfahrensablauf je nach Produktausbildung zu beschleunigen, ihn aber zum anderen auch sicherer (namentlich ausschussfrei) zu gestalten. Dabei ist ergänzend zu berücksichtigen, dass unterschiedliche Ausgangsprodukte (bei Würsten z.B. Brätkonsistenz, Art des Verpackungsmaterials etc.) zusätzliche Einflussgrößen darstellen.

Als ein Beispiel sei nur der Durchmesser des fertigen Produkts fokussiert: Wird etwa eine relativ dünne Wurst hergestellt, so erhöht sich - bei gleichbleibender Pumpleistung der Füllmaschine - die Geschwindigkeit des Produktstranges beim Füllen, so dass zwecks Optimierung der weiteren Verfahrensschritte das Ansteuern des Verdränger- und Verschließmechanismus' verändert werden sollte. Gleichzeitig aber brauchen die Verdrängerelemente (sowie ggf. die Verschließ- und Abtrennmechanismen) nicht jeweils auf ihre maximale Öffnungsweite zurückgefahren zu werden, was wiederum Einfluss auf den Ansteuerungsvorlauf und der zum Verdrängen sowie Verschließen und ggf. Abtrennen benötigten Zeit hat. Die Liste solcher Interdependenzen ließe sich fortsetzen. Es ist das Verdienst der Erfindung, die Bedeutung solcher Interdependenzen erkannt und in der Konsequenz dessen eine umfassende Gesamtvorrichtung entwickelt zu haben, welche eine automatische Berücksichtigung jener Interdependenzen ermöglicht und deshalb die Produktionsgeschwindigkeit und -sicherheit gegenüber dem Stand der Technik entscheidend erhöht.

Bei einer derartigen Vorrichtung weist die Verschließmaschine vorzugsweise einen Spreizverdränger und eine Clipeinrichtung auf, deren Bewegungen in Abhängigkeit der von der Füllmaschine übernommenen Betriebsparameter einzeln steuerbar sind. Eine derartige Verschließmaschine ist zwar schon aus der deutschen Offenlegungsschrift 196 44 074 bekannt, jedoch wird die dort beschriebene Einzelsteuerung der Bewegungsabläufe im Zusammenhang mit einer Datenleitung zwischen Füll- und Verschließmaschine besonders sinnvoll, da dann eine Feinabstimmung von Füllund Verschließmaschine zur Optimierung des Produktionsprozesses möglich ist. Eine derartige Feinabstimmung der Bewegungsabläufe auf die Betriebsparameter ist bei herkömmlichen, kurvenscheibengesteuerten Verschließmaschinen hingegen nicht möglich, da dort die einzige während des Betriebes veränderliche Kenngröße die Drehzahl der Kurvenscheibe ist.

Eine bevorzugte Ausführungsvariante der Vorrichtung zeichnet sich dadurch aus, daß sie eine Darmbremse aufweist und daß sich der Resthüllenentferner in unmittelbarer Nachbarschaft zur Darmbremse befindet. Vorzugsweise ist die Darmbremse relativ zum Füllrohr derart beweglich, daß sie wahlweise das Füllrohr nahe seiner Mündung umschließt oder vom Füllrohr abgezogen ist. Dabei ist der Resthüllenentferner derart angeordnet und ausgeführt, daß er sich bei vom Füllrohr abgezogener Darmbremse zwischen Darmbremse und Füllrohrmündung befindet, um dort befindliche Wursthülle zu fassen und zu entfernen. Eine derartige Anordnung von Darmbremse und Resthüllenentferner ermöglichst dem Resthüllenentferner einen leichten Zugriff auf einen etwaigen, noch in der Darmbremse oder auf dem Füllrohr befindlichen Wursthüllenrest.

Dem Erreichen des Erfindungsziels dient auch die Weiterbildung der Vorrichtung dahingehend, dass das Magazin zum Magazinieren unbefüllter Wursthüllen mehrere Aufnahmen für jeweils eine Wursthülle aufweist, die vorzugsweise als Stäbe ausgebildet sind, auf die die Wursthüllen einzeln aufgeschoben werden können. Die Stäbe können dabei im Durchmesser so ausgelegt sein, dass sie Wursthüllen unterschiedlichen Durchmessers aufnehmen können. Ein solches Stabmagazin ermöglicht einen einfachen Zugriff auf eine einzelne Wursthülle, da jede Wursthülle separat auf jeweils einem eigenen Stab angeordnet ist.

Die Aufnahmen sind vorzugsweise derart beweglich angeordnet, daß jede von ihnen wahlweise in eine ortsfeste Übergabeposition verfahrbar ist. Eine derartige ortsfeste Übergabeposition erleichtert das maschinelle Entnehmen einer Wursthülle aus dem Magazin.

Die Aufnahmen sind vorzugsweise an einem um eine Rotationsachse drehbaren Träger so befestigt, daß sie parallel zur Rotationsachse und zueinander verlaufen und sämtlich den gleichen Abstand von der Rotationsachse haben. Bei einem solchen Magazin ist es besonders leicht, eine jede Aufnahme wahlweise in die Übergabeposition zu verfahren.

Bei dem Magazin ist die Lage der Rotationsachse vorzugsweise in Höhe und Neigung verstellbar. Damit kann das Magazin exakt zu einem benachbarten Füllrohr einer Füllmaschine ausgerichtet werden.

Außerdem weist das Magazin vorzugsweise einen steuerbaren Antrieb zum wahlweisen Verfahren der Aufnahmen in die Übergabeposition auf. Der Antrieb treibt dabei vorzugsweise den drehbaren Träger an.

Einen weiteren Beitrag zum Erreichen des Erfindungsziels leistet eine Magaziniervorrichtung mit einem Magazin der vorbeschriebenen Art, welche sich durch eine Abgabevorrichtung für Wursthüllen auszeichnet, die Mittel zur Aufnahme einer Wursthülle an der Übergabeposition, Mittel zum Entnehmen der Wursthülle aus dem Magazin und Mittel zum Abgeben der Wursthülle an eine Abgabeposition umfaßt. Diese Abgabevorrichtung umfaßt vorzugsweise einen Greifer, der in einer parallel zu den Aufnahmen für die unbefüllten Wursthüllen verlaufenden Richtung längsverschieblich ist und zusätzlich quer zu dieser Richtung schwenkbar ist. Die Abgabevorrichtung umfaßt dabei vorzugsweise jeweils einen separat ansteuerbaren Antrieb zum Öffnen und Schließen des Greifers, zum Längsverschieben des Greifers und zum Verschwenken des Greifers. Die drei Antriebe sind vorzugsweise so angeordnet, daß der Antrieb zum Verschwenken des Greifers die beiden übrigen Antriebe mitbewegt und daß der Antrieb zum Längsverschieben des Greifers den Antrieb zum Öffnen und Schließen des Greifers mitbewegt. Die drei Antriebe sind somit gewissermaßen hintereinandergeschaltet. Mit einem derartigen Greifer lassen sich auf einfache Art und Weise Wursthüllen aus einem Magazin der vorbeschriebenen Art entnehmen und bei entsprechender Ausrichtung des Magazins zu dem Füllrohr einer Füllmaschine auch leicht auf dieses Füllrohr aufschieben.

Schließlich ist der Resthüllenentferner der Vorrichtung vorteilhaft so ausgebildet, daß er einen schwenkbaren Klemmarm mit einer wahlweise zu öffnenden und zu schließenden Klemme an seinem freien Ende aufweist. Mit einer solchen Klemme kann ein in der Füll oder in der Verschließmaschine befindlicher Wursthüllenrest gegriffen werden und durch Schwenken des Klemmarmes aus der Füll- oder der Verschließmaschine entfernt werden. Vorzugsweise schließt die geöffnete Klemme eine U-förmige Öffnung ein, welche in der Schwenkstellung des Klemmarmes nach unten geöffnet ist, um entfernte Wursthülle abzuwerfen. Die aus Verschließ- oder Füllmaschine entfernte Wursthülle fällt dann automatisch aus der Klemme des Resthüllenentferners heraus.

Die Vorrichtung soll nun anhand eines Ausführungsbeispiels mit Hilfe der Figuren näher erläutert werden. Diese zeigen:
- Fig. 1: eine Anlage zum automatischen Herstellen von Würsten in der Aufsicht;
- Fig. 2: einen Resthüllenentferner und eine Darmbremse in der Seitenansicht;
- Fig. 3: den Resthüllenentferner und die Darmbremse aus Fig. 2 in der Aufsicht;
- Fig. 4: den in Fig. 2 dargetellten Resthüllenentferner sowie die Darmbremse in einer anderen Stellung des Resthüllenentferners;
- Fig. 5: eine Magaziniervorrichtung in der Seitenansicht;
- Fig. 6: die Magaziniervorrichtung aus Fig. 5 samt benachbarter Füllrohre einer Füllmaschine in der Aufsicht;
- Fig. 7: die Magaziniervorrichtung aus Fig. 5 und 6 samt benachbarter Füllrohr einer Füllmaschine in einer Frontansicht;
- Fig. 8: Antriebe für einen Greifer der Magaziniervorrichtung aus Fig. 6 bis 7 in einer Detailansicht;
- Fig. 9 bis 13: die Ansicht aus Fig. 7 in mehreren Betriebsstadien der Magaziniervorrichtung; und
- Fig. 14 bis 19: die Ansicht aus Fig. 1 in mehreren Betriebsstadien der Anlage zum Herstellen von Würsten.

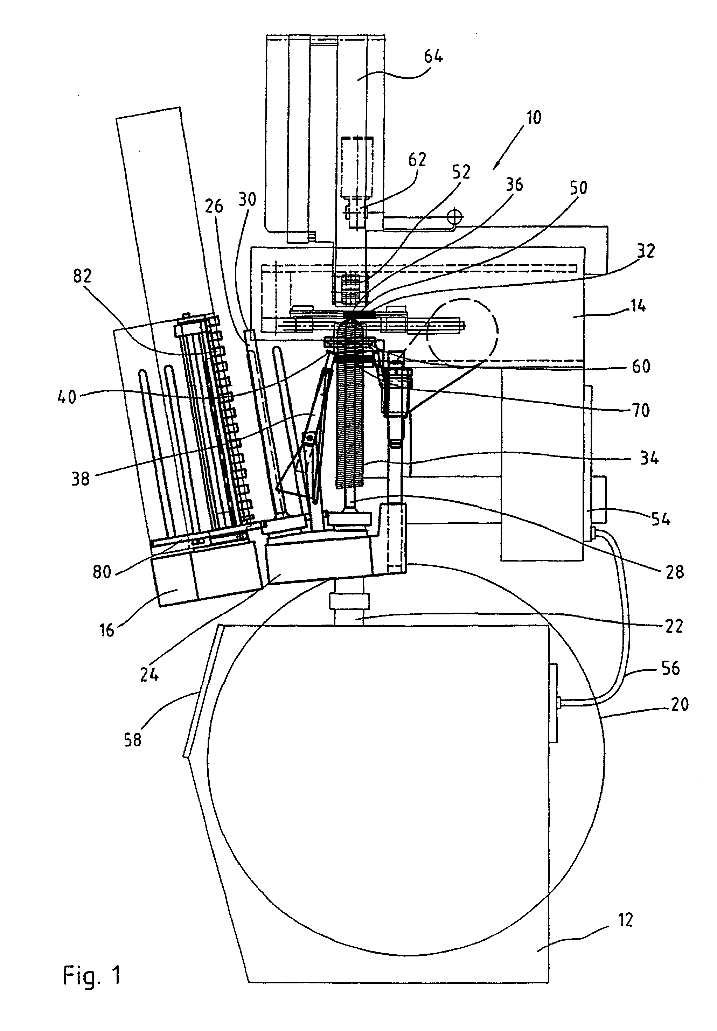

Figur 1 zeigt eine vollautomatische Vorrichtung 10 zum Herstellen wurstartiger Verpackungen, die im folgenden als Würste bezeichnet werden. Unter Würsten werden dabei auch solche Verpackungen verstanden, die aus einer schlauchförmigen Verpackungshülle bestehen, die an beiden Enden verschlossen ist und beispielsweise mit Dichtmasse oder einem anderen Füllgut befüllt ist.

Die Hauptbestandteile der Vorrichtung 10 sind eine Füllmaschine 12, eine Verschließmaschine 14 und eine Magaziniervorrichtung 16.

Die Füllmaschine 12 besteht aus einem trichterförmigen Vorratsbehälter 20 (in der Zeichnung durch einen Kreis angedeutet) für pastöses Füllgut, der an seinem unteren Ende einen Auslaß besitzt, aus dem heraus das Füllgut in eine Förderpumpe gelangen kann. Die Förderpumpe fördert das Füllgut in einen Förderkanal 22, der in einem Zwillingssystem 24 mit zwei Füllrohren 26 und 28 mündet. Die beiden Füllrohre 26 und 28 sind an dem Zwillingssystem 24 so befestigt, daß sie ihre Position in einer Schwenkbewegung tauschen können. Nur eines der beiden Füllrohre ist jeweils an den Förderkanal 22 angeschlossen und befindet sich in einer Füllstellung. In Fig. 1 ist dies das Füllrohr 28, das mit dem Förderkanal 22 fluchtet. Das Füllrohr 26 befindet sich in eine Wartesellung. Beide Füllrohre 26 und 28 weisen an ihrem Ende jeweils eine Mündungsöffnung 30 bzw. 32 auf. Auf das Füllrohr 28 ist eine einseitig verschlossene schlauchförmige Verpackungshülle 34 - im folgenden als Wursthülle 34 bezeichnet - so aufgezogen, daß sich ihr verschlossenes Ende 36 vor der Mündung 32 des Füllrohres 28 befindet. Die Wursthülle 34 ist zur Raupe gestaucht, so daß sie auf dem Füllrohr nur eine Länge von 40 bis 45 cm einnimmt, obwohl ihre Gesamtlänge gestreckt ca. 60 m beträgt.

Neben den zwei Füllrohren 26 und 28 weist das Zwillingssystem 24 auch noch einen Haltearm 38 auf, der schwenkbar gelagert ist, um mit seinem freien Ende 40 wahlweise gegen eines der beiden Füllrohre 26 oder 28 zu drücken, und eine dort befindliche Wursthülle 34 festzuhalten. In Fig. 1 drückt das freie Ende 40 des Haltearmes 38 die Wursthülle 34 gegen das in der Füllstellung befindliche Füllrohr 28.

Die Verschließmaschine 14 ist mit einem Spreizverdränger 50 der bekannten Art und einer Clipeinrichtung 52 ausgestattet, die mittels jeweils zweier beweglicher Stempel und zweier beweglicher Matrizen zwei Verschlußklammern gleichzeitig setzen und verschließen kann. Die Verschließmaschine 14 ist von der aus der DE-OS 196 44 074 bekannten Art, d.h. daß die Bewegungen des Verdrängers 50 beim Einschnüren einer befüllten Wursthülle und beim anschließenden Verlängern des dabei entstandenen füllgutfreien Zopfes durch Spreizen der Verdrängerscheren sowie die Bewegungen des Stempels und der Matrize beim Setzen und Verschließen der Verschlußklammern jeweils einzeln steuerbar sind. Dazu ist die Verschließmaschine 14 mit einer Steuereinrichtung 54 ausgerüstet. Diese wiederum ist über eine Datenleitung 56 mit einer entsprechenden Steuereinrichtung 58 der Füllmaschine 12 ausgerüstet, um von dieser Betriebsparameter wie Tageszeit, Füllgewicht oder Durchmesser und Füllgeschwindigkeit zu übernehmen und entsprechend den Spreizverdränger und die Clipeinrichtung anzusteuern.

Mit der Verschließmaschine 14 verbunden ist eine Darmbremse 60, die in ihrer in Fig. 1 abgebildeten Position das Füllrohr 28 im Bereich seiner Mündung 32 umschließt und die Wursthülle 34 von außen auf das Füllrohr 28 drückt. Die Kraft, mit der die Wursthülle 34 auf das Füllrohr 28 gedrückt wird, ist einstellbar.

Ebenfalls an der Verschließmaschine 14 angebracht ist eine Kontrolleinrichtung 62, die dem Erfassen der Prallheit einer jeweils hergestellten Wurst dient. Ausführungsvarianten und Arbeitsweisen der Kontrolleinrichtung 62 sind ausführlich in der deutschen Patentschrift 196 46 721 beschrieben. Die Kontrolleinheit 62 ist mit der Darmbremse 60 verbunden. Ergeben die Messungen der Kontrolleinheit 62, daß die Prallheit einer hergestellten Wurst unter dem Sollwert liegt, wird die Darmbremse 60 in dem Sinne nachreguliert, daß sie die Wursthülle 34 stärker auf das Füllrohr 28 drückt. Ermittelt die Kontrolleinheit 62 hingegen eine zu große Prallheit, wirkt sie auf die Darmbremse 60 derart ein, daß diese die Wursthülle 34 weniger stark auf das Füllrohr 28 drückt.

Im Bereich der Kontrolleinheit 62 befindet sich außerdem ein Förderband 64 zum Abtransport fertig hergestellter Würste. Dieses Förderband 64 kann mit einer Wägeeinrichtung zum Erfassen des Gewichtes der hergestellten Würste ausgestattet sein. Diese Wägeeinrichtung kann im Sinne der deutschen Offenlegungsschrift 195 19 394 ebenfalls mit der Darmbremse 60 verbunden sein, um beispielsweise gewichtsgenaue Würst mit einem Bildaufdruck herstellen zu können.

Die Verschließmaschine 14 kann mitsamt der an ihr befestigten Darmbremse 60 sowie der Kontrolleinheit 62 und des Förderbandes 64 von der Füllmaschine 12 so weggeschwenkt werden, daß der Verdränger 50 von der Mündung 32 des Füllrohres 28 entfernt und die Darmbremse 60 vom Füllrohr 28 abgezogen ist. Das Füllrohr 28 ist dann frei zugänglich und kann insbesondere seine Position mit dem Füllrohr 26 tauschen.

Abgesehen von der Datenleitung zwischen Verschließ- und Füllmaschine und der durch diese ermöglichten Übernahme von Betriebsparametern aus der Füllmaschine 12 in die Verschließmaschine 14 arbeitet die in Fig. 1 abgebildete Vorrichtung - soweit sie bis hierhin erläutert wurde - in bekannter Art und Weise. Füllgut wird mittels der Förderpumpe der Füllmaschine 12 in das Füllrohr 28 gepreßt, tritt aus dessen Mündung 32 aus und füllt auf diese Weise die einseitig verschlossene Wursthülle 34 auf. Während des Befüllens wird weitere Wursthülle von dem Füllrohr 28 abgezogen. Diesem Abziehen der Wursthülle wirkt die Darmbremse 60 entgegen, indem sie die Wursthülle 34 mit einer einstellbaren Kraft auf das Äußere des Füllrohres 28 drückt. Der Fülldruck, mit dem das Füllgut in die Wursthülle 34 gepreßt wird, sowie die zum Abziehen der Wursthülle 34 vom Füllrohr 28 erforderliche Kraft stehen im Gleichgewicht zueinander und sorgen für einen entsprechenden Innendruck in der Wursthülle 34. Ist ein Abschnitt einer Wursthülle 34 ausreichend befüllt, greifen die beiden Verdrängerscheren des Spreizverdrängers 50 seitlich in die Wursthülle 34 hinein und schnüren diese ein. Die beiden Verdrängerscheren sind dabei in Längsrichtung des Füllrohres 28 zueinander unmittelbar benachbart. Nach dem Einschnüren wird die füllrohrfernere Verdrängerschere von der füllrohrnäheren Verdrängerschere in Füllrohrlängsrichtung wegbewegt und erzeugt dabei einen füllgutfreien Zopf in der Wursthülle 34, dessen Länge ausreicht, um mit zwei Verschlußklammern verschlossen zu werden. Diese werden anschließend von der Verschließeinrichtung 52 gesetzt. Zwischen den beiden Verschlußklammern wird der Zopf durchgetrennt, so daß die fertig hergestellte Wurst von der übrigen Wursthülle abgeschnitten ist.

Mit Hilfe der Kontrolleinrichtung 62 wird die Prallheit der Wurst geprüft und die Darmbremse 60 gegebenenfalls im oben beschriebenen Sinne nachgestellt. Nach Produktion einer gewissen Anzahl von Würsten ist die auf das Füllrohr 28 aufgezogene Wursthülle 34 verbraucht. Die Produktion kann dann nur mit einer neuen, unbefüllten Wursthülle fortgesetzt werden.

Das Einbringen einer neuen unbefüllten Wursthülle in die Produktion geschieht dadurch, daß diese unbefüllte Wursthülle zunächst auf das leicht zugängliche und in der Warteposition befindliche Füllrohr 26 aufgezogen wird, und zwar möglichst bevor die Wursthülle 34 ganz aufgebraucht ist. Sobald die Wursthülle 34 aufgebraucht ist, wird die Verschließmaschine 14 samt der Darmbremse 60, der Kontrolleinheit 62 und des Transportbandes 64 vom Füllrohr 28 so weit weggeschwenkt, daß dieses frei zugänglich ist. Durch eine Schwenkbewegung wird die Position der beiden Füllrohre 26 und 28 vertauscht, so daß sich nunmehr das Füllrohr 26 in der Füllposition befindet. Damit die auf das Füllrohr 26 aufgezogene Wursthülle nicht vom Füllrohr 26 abfällt, wird sie von dem Haltearm 38 festgehalten. Bevor die Verschließmaschine 14 wieder an die Füllmaschine 12 herangeschwenkt wird, muß noch der unbefüllbare Rest der Wursthülle 34 aus der Verschließmaschine 14 entfernt werden. Anschließend wird die Verschließmaschine 14 wieder an die Füllmaschine 12 herangeschwenkt. Dabei wird auch automatisch die Darmbremse 60 auf das Füllrohr 26 und die darauf aufgezogene frische unbefüllte Wursthülle aufgeschoben. Die Produktion kann nun von neuem beginnen.

Zusätzlich zu den bekannten Bestandteilen weist die Vorrichtung 10 in Fig. 1 einen Resthüllenentferner 70 auf, der in unmittelbarer Nachbarschaft zur Darmbremse 60 an einer Konsole 72 befestigt ist, welche auch die Darmbremse 60 trägt. Wenn die Darmbremse 60 durch Verschwenken der Verschließeinrichtung 14 vom Füllrohr 28 abgezogen wird, schwenkt der Resthüllenentferner 70 entsprechend mit. Er befindet sich dann zwischen der Mündung 32 des Füllrohres 28 und der Darmbremse 60. Der Resthüllenentferner 70 ist in den Fig. 2 bis 4 detaillierter dargestellt und wird in der Beschreibung zu diesen Figuren ausführlich erläutert.

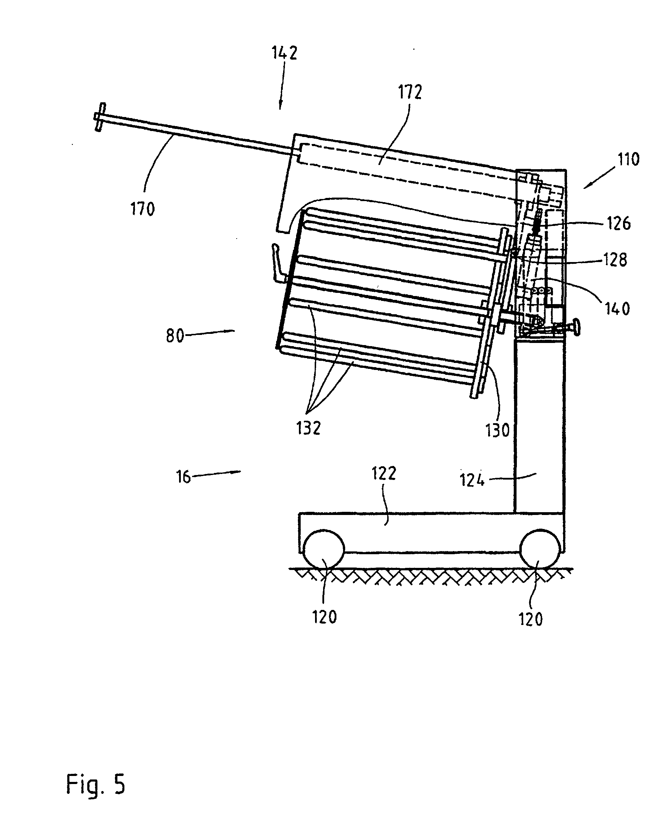

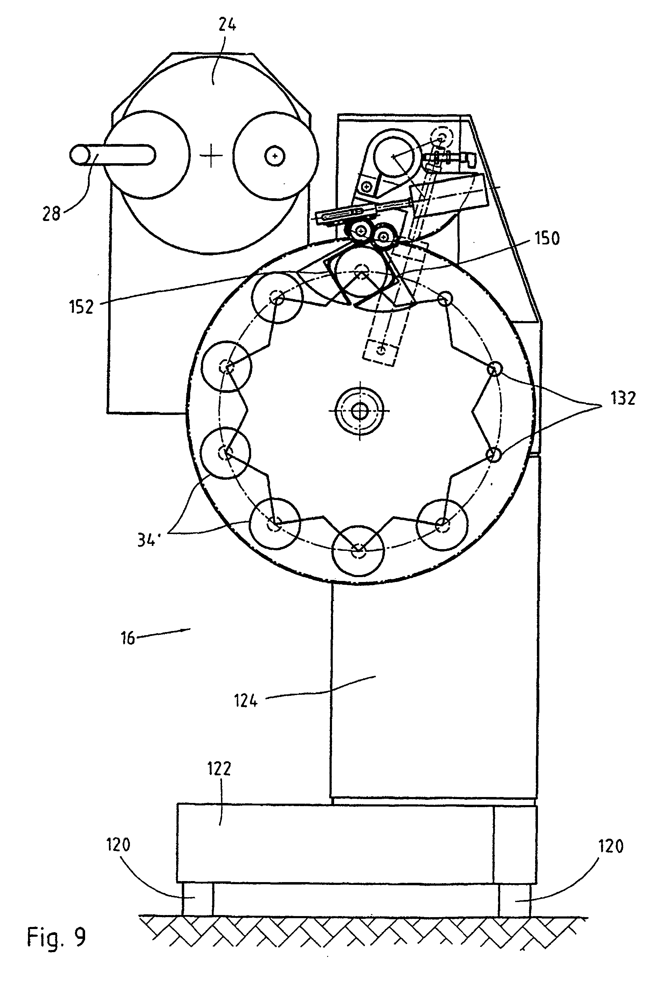

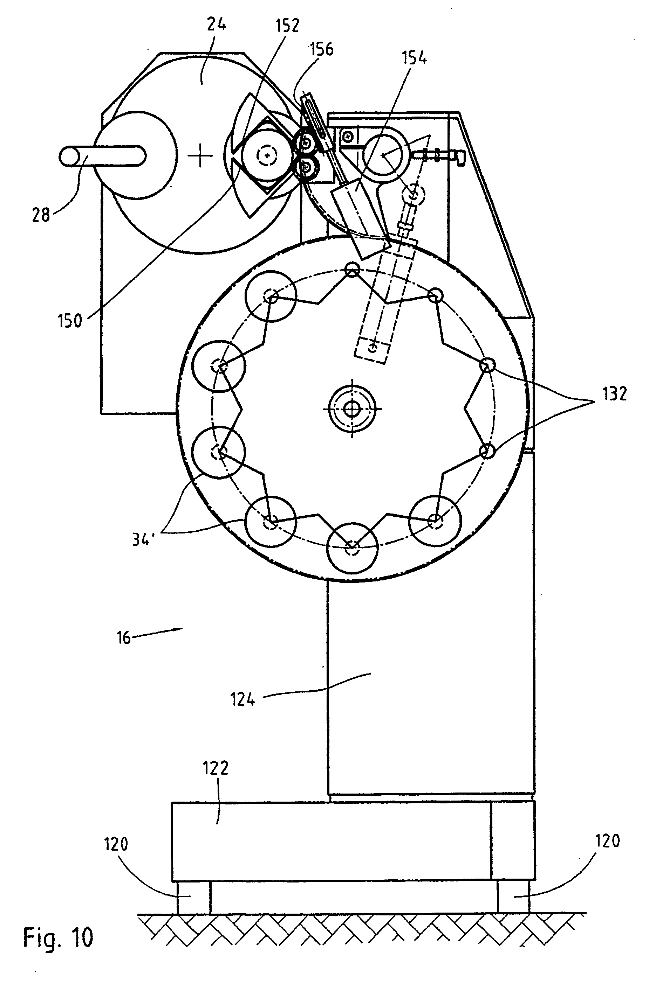

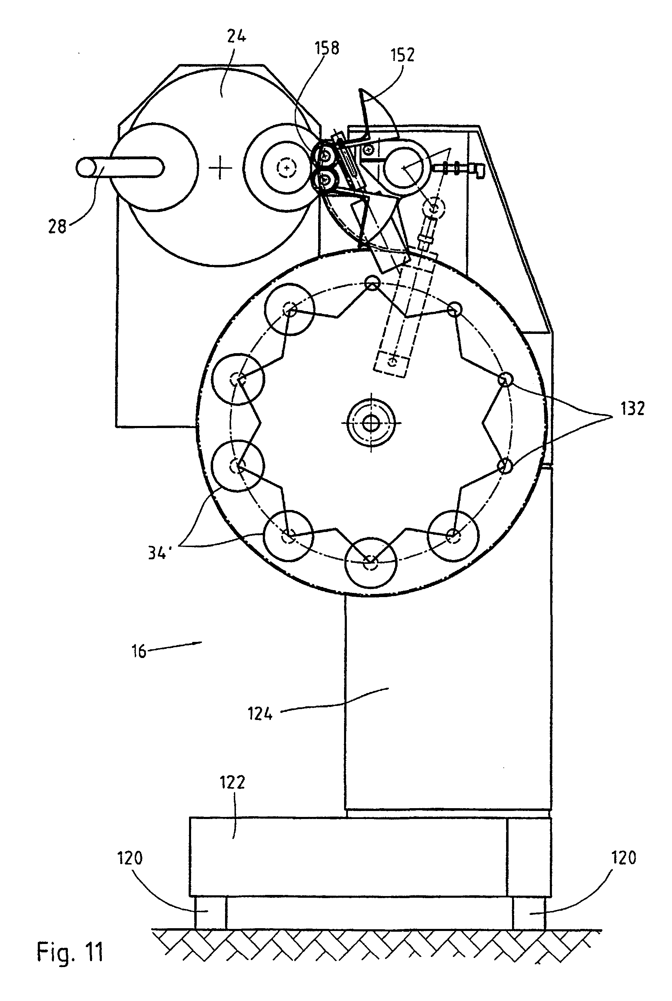

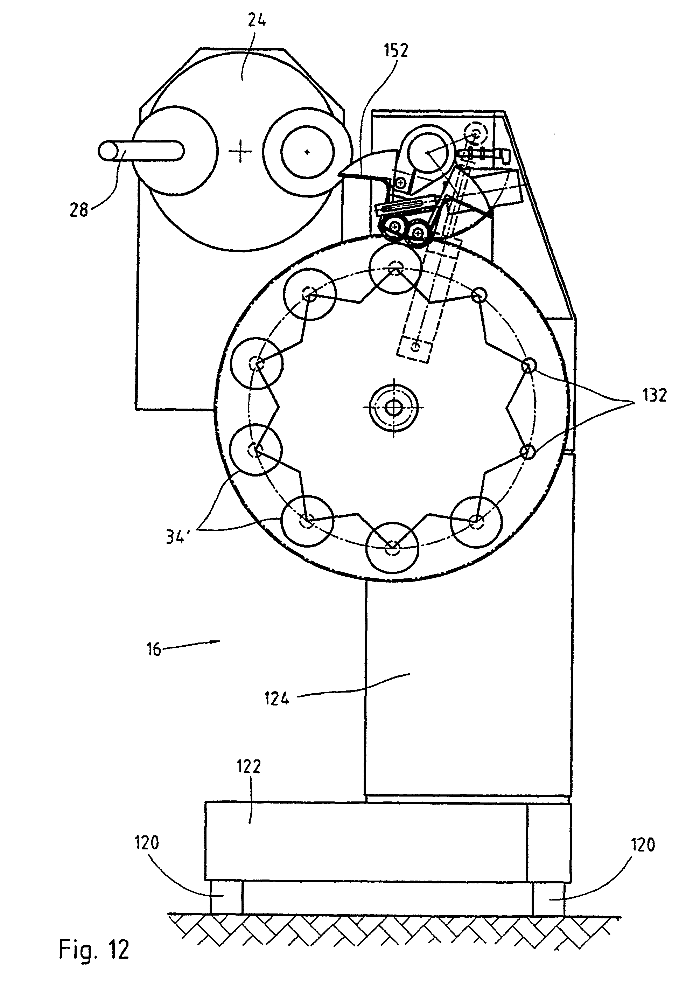

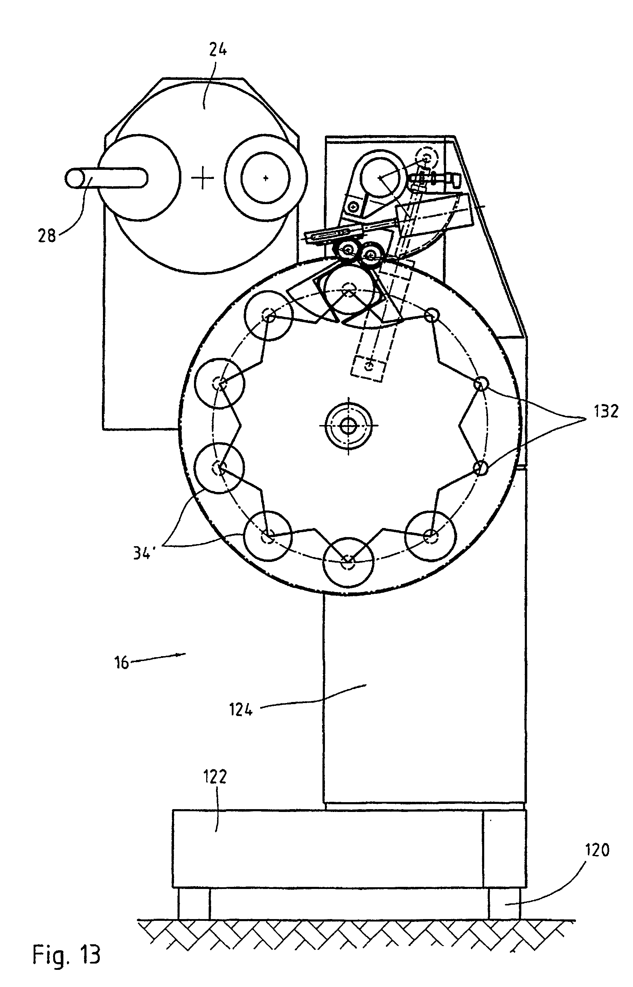

Außerdem gehört zur Vorrichtung 10 in Fig. 1 ein Stiftmagazin 80 als Teil der Magaziniervorrichtung 16, das dem Magazinieren unbefüllter Wursthüllen dient. Ein weiterer Bestandteil der Magaziniervorrichtung 16 ist ein Greifer 82, mit dessen Hilfe eine Wursthülle aus dem Stiftmagazin 80 entnommen und auf das jeweils gerade nicht in der Füllposition befindliche Füllrohr aufgeschoben werden kann. Der Aufbau des Stiftmagazins 80 wird in der Beschreibung zu den Figuren 5 bis 7 näher erläutert. Die Betriebsweise des Stiftmagazins 80 ergibt sich aus den Figuren 9 bis 13 und 14 bis 19 sowie der dazugehörigen Beschreibung.

Zunächst soll jedoch der Resthüllenentferner 70 anhand der Figuren 2 bis 4 näher erläutert werden. Diese Figuren zeigen nicht nur den Resthüllenentferner 70, sondern auch die Darmbremse 60. Beide sind - wie bereits gesagt - an einer gemeinsamen Konsole 72 befestigt, der seinerseits an der Verschließmaschine 14 befestigt ist.

Der Resthüllenentferner 70 besitzt einen schwenkbaren Klemmarm 90, an dessen freiem Ende sich eine Klemme 92 mit zwei Klemmbacken 94 und 96 befindet. Die Klemme 92 kann mit Hilfe eines ersten Pneumatikzylinders 98 geöffnet und geschlossen werden. Der erste Pneumatikzylinder 98 treibt dazu mittels seiner Triebstange 99 die Klemmbacke 96 an. An seinem der Klemme 92 gegenüberliegenden Ende ist der Klemmarm 90 in einem Schwenklager 100 gelagert. Ein Hebel 102 ist im Bereich des Schwenklagers 100 winklig am Klemmarm 90 befestigt. Am freien Ende des Hebels 102 greift ein zweiter Pneumatikzylinder 104 mit seiner Antriebsstange 105 an. Der zweite Pneumatikzylinder 104 dient dem Verschwenken des Klemmarmes 90 und stützt sich in einem Stützlager 106 ab, welches sich an einer Halterung 108 befindet, mittels der der gesamte Resthüllenentferner 70 an der Konsole 72 befestigt ist.

Fig. 2 zeigt den Resthüllenentferner 70 in seiner Stellung, die er während des Befüllens von Würsten einnimmt. Die Klemme 92 ist geöffnet und die beiden Klemmbacken 94 und 96 befinden sich oberhalb bzw. unterhalb des in der Figur nicht dargestellten Füllrohres. Die Klemme 92 befindet sich dabei aus Sicht der Füllmaschine 12 vor der Darmbremse 60.

Fig. 3 zeigt die in Fig. 2 dargestellte Situation in einer Ansicht von oben.

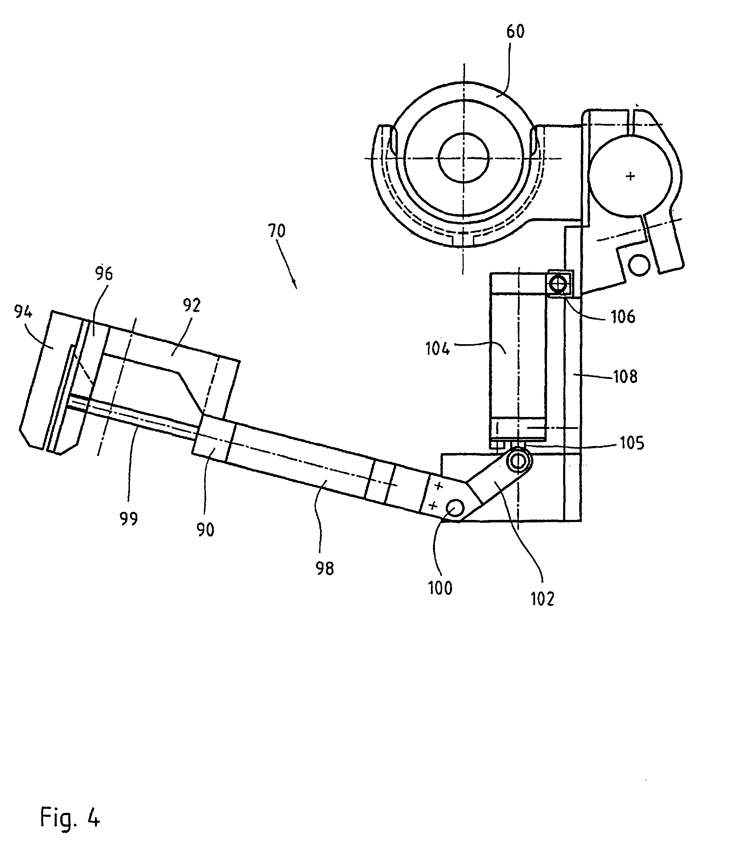

Fig. 4 zeigt den Resthüllenentferner 70 in seiner abgeschwenkten Position, die er nach dem Entfernen eines unbefüllbaren Wursthüllenrestes einnimmt. Damit der Resthüllenentferner 70 diese Schwenkbewegung durchführen kann, müssen zunächst Darmbremse 60 und Wursthüllenentferner 70 durch Verschwenken der Verschließmaschine 14 vom entsprechenden Füllrohr abgezogen werden. Erst dann nämlich ist der Weg für die Schwenkbewegung des Klemmarmes 90 samt der Klemme 92 frei. Wenn die Darmbremse 60 und der Resthüllenentferner 70 in der beschriebenen Weise derart verschwenkt sind, daß sie sich vor der Mündung des Füllrohres befinden, kann das Entfernen eines Wursthüllenrestes mit Hilfe des Resthüllenentferners 70 dadurch erfolgen, daß zunächst die Klemme 92 geschlossen wird, indem der erste Pneumatikzylinder 98 die Klemmbacke 96 gegen die andere Klemmbacke 94 drückt. Dadurch wird ein Wursthüllenrest, der sich zwischen der Darmbremse 60 und der Mündung des Füllrohres befindet, eingeklemmt. Anschließend wird der Klemmarm 90 in die in Fig. 4 abgebildete Stellung geschwenkt. Dabei nimmt er den Wursthüllenrest mit und entfernt ihn auf diese Weise aus der Darmbremse 60. Dieses Stadium, bei dem die Klemme 92 immer noch geschlossen ist, ist in Fig. 4 abgebildet. Um den Wursthüllenrest abzuwerfen, wird daraufhin die Klemme 92 durch Zurückziehen der Klemmbacke 96 mittels des Pneumatikzylinders 98 geöffnet. Die Klemme 92 ist dann nach unten offen, so daß der Wursthüllenrest zwischen den beiden Klemmbacken 94 und 96 herausfallen kann. Schließlich wird der Klemmarm 90 mit weiterhin geöffneter Klemme 92 wieder in seine in Fig. 2 abgebildete Position zurückgeschwenkt. Der Resthüllenentferner 70 und die Darmbremse 60 können dann auf ein beispielsweise frisch mit unbefüllter Wursthülle bestücktes Füllrohr aufgeschoben werden.

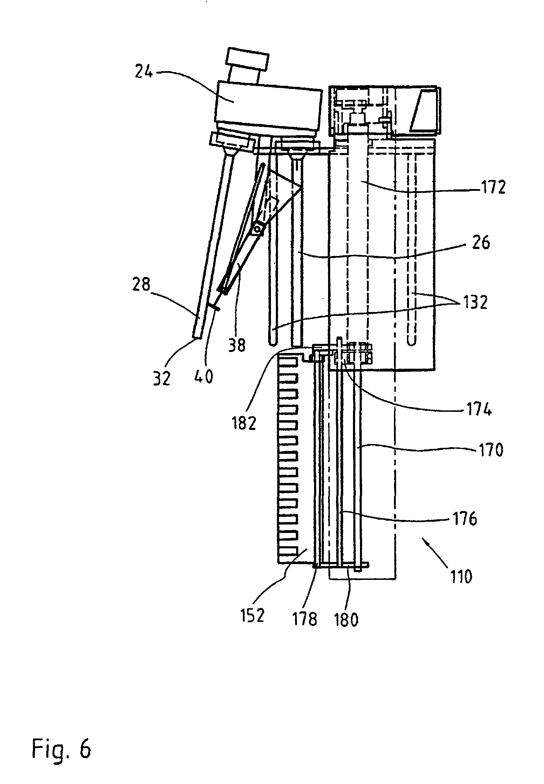

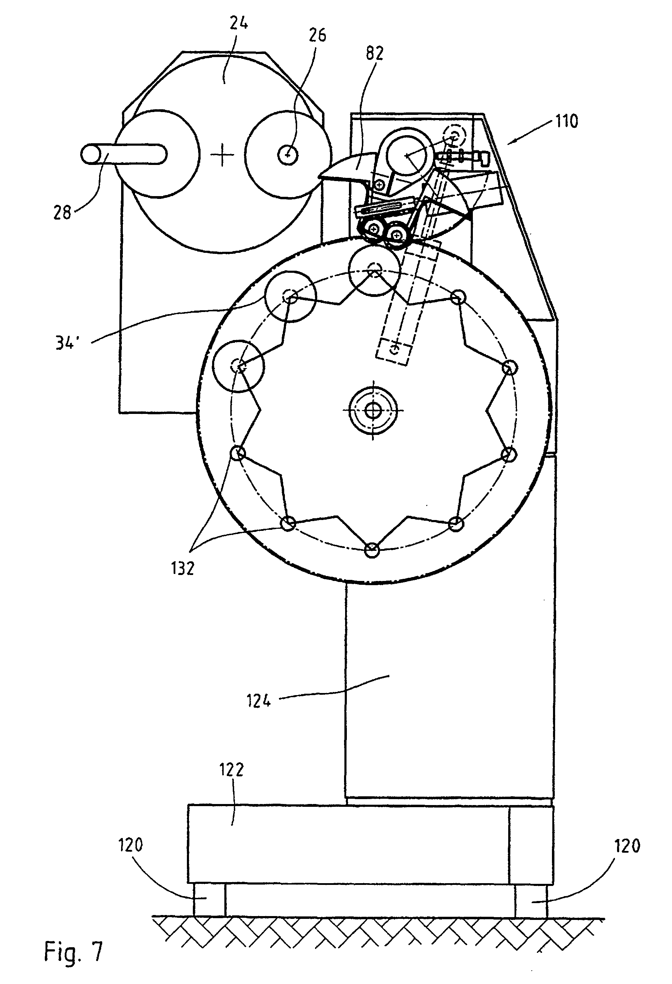

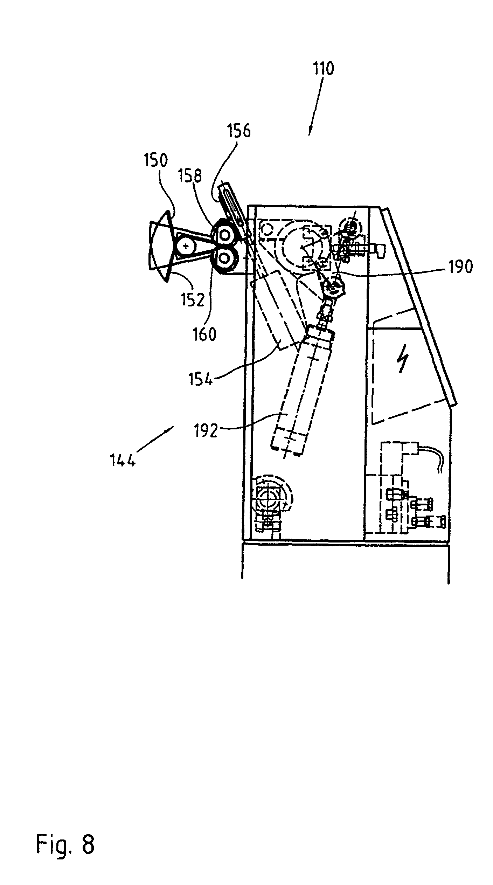

In den Figuren 5 bis 8 ist die Magaziniervorrichtung 16 mit dem Stiftmagazin 80 und einer Abgabevorrichtung 110, die den Greifer 82 umfaßt, im Detail abgebildet, und zwar in Fig. 5 in einer Seitenansicht, in Fig. 6 in einer Draufsicht und in Fig. 7 in einer Frontalansicht. Fig. 8 zeigt in einem Ausschnitt den Antrieb für den Greifer 82.

Die Magaziniervorrichtung 16 besitzt ein auf Rädern 120 verfahrbares Maschinengestell 122. An einem aufragenden, teleskopartig verlängerbaren Arm 124 ist eine Tragplatte 126 um eine horizontale Achse schwenkbar gelagert. Der Lagerung dient ein Lager 128. Die Tragplatte 126 trägt sowohl das Stiftmagazin 80 als auch die Abgabevorrichtung 110 mit dem Greifer 82. Da der Arm 124 teleskopartig ausfahrbar und die Tragplatte 126 um eine horizontale Achse schwenkbar ist, können die Höhe von Stiftmagazin 80 und Greifer 82 sowie deren horizontale Neigung eingestellt werden.

Das Stiftmagazin 80 wird von einem Träger 130 gebildet, der in der Tragplatte 126 um eine Rotationsachse drehbar gelagert ist. Der Träger 130 trägt mehrere Magazinstifte 132, die sämtlich parallel zu der Rotationsachse verlaufen und parallel zu dieser ausgerichtet sind. Das aus Träger 130 und Magazinstiften 132 bestehende Magazin kann mittels eines nicht dargestellten Antriebs um die Rotationsachse gedreht werden.

Die Abgabevorrichtung 110 wird von dem Greifer 82 sowie drei Antrieben gebildet, nämlich einem Schwenkantrieb 140, einem Längsverschiebeantrieb 142 und einem Schließantrieb 144. Der Greifer 82 selbst wird von zwei Greiferklauen 150 und 152 gebildet, die jeweils um eine parallel zur Rotationsachse des Stiftmagazins verlaufende Achse schwenkbar sind, um den Greifer 82 zu öffnen und zu schließen. Die Greiferklauen 150 und 152 werden von dem Schließantrieb 144 angetrieben. Dazu umfaßt der Schließantrieb einen Pneumatikzylinder 154, der eine Zahnstange 156 vor- oder zurückschiebt und auf diese Weise zwei Zahnräder 158 und 160 antreibt, die an den Greiferklauen 150 und 152 befestigt sind. Durch die beiden ineinandergreifenden Zahnräder 158 und 160 wird sichergestellt, daß sich die Greiferklauen 150 und 152 synchron bewegen. Der Verschließantrieb 144 befindet sich am Ende einer Schubstange 170, die zu dem Längsverschiebeantrieb 142 gehört. Die Schubstange 170 ist in einen Vorschubzylinder 172 des Längsverschiebeantriebs 142 geführt. Sie kann in diesem pneumatisch vor- und zurückbewegt werden.

Der Vorschubzylinder 172 ist in der Tragplatte 126 um seine Längsachse schwenkbar gelagert. An seinem der Tragplatte 126 abgewandten Ende trägt er eine Führungsplatte 174 mit einer Führung 176 für eine Führungsstange 178, die parallel zur Schubstange 170 verläuft. An ihrem freien Ende ist die Schubstange 170 über ein Verbindungsstück 180 fest mit der Führungsstange 178 verbunden. Mit Hilfe der Führungsstange 178 wird verhindert, daß sich der Vorschubzylinder 172 und die Schubstange 170 relativ zueinander um ihre Längsachse verdrehen können. Parallel zum Verbindungsstück 180 verläuft eine am anderen Ende der Führungsstange 178 befestigte Lagerplatte 182. Der Greifer erstreckt sich zwischen dem Verbindungsstück 180 und der Lagerplatte 182 und ist in beiden gelagert. Die Lagerplatte 182 umgreift den Vorschubzylinder 172 und stützt sich auf diese Weise an diesem ab. Sie ist dabei jedoch auf dem Vorschubzylinder 172 in dessen Längsrichtung verschiebbar. Auf diese Weise ist der Greifer 82 verwindungssteif mit dem Längsverschiebeantrieb 142 verbunden und kann mittels des Vorschubzylinders 172 in der Schubstange 170 in Längsrichtung der beiden vor- und zurückgeschoben werden.

Wie bereits erwähnt, ist der Vorschubzylinder 172 in der Tragplatte 126 schwenkbar gelagert. Ein an dem Vorschubzylinder 172 in der Nähe von dessen Lagerung in der Tragplatte 126 befestigter Anlenkhebel 190 dient zusammen mit einem Pneumatikzylinder 192 als Schwenkantrieb 142 für die Abgabevorrichtung 110. Mit Hilfe des Schwenkantriebs kann der Greifer 82 um die Längsachse des Vorschubzylinders 172 und der Schubstange 170 herumgeschwenkt werden.

Die Abgabevorrichtung 110 dient dazu, dem Stiftmagazin 80 eine unbefüllte Wursthülle mittels des Greifers 82 zu entnehmen und auf ein leeres Füllrohr einer Füllmaschine aufzuschieben. Dazu führt der Greifer mit Hilfe seiner Antriebe die folgenden, in den Fig. 9 - 13 dargestellten Bewegungen durch: Ausgehend von einer eingezogenen Position - in Fig. 6 ist die ausgefahrene Position dargestellt - mit geöffneten Greiferklauen 150 und 152 und zu einem in der Übergabeposition befindlichen Magazinstift 132 tritt zunächst der Schließantrieb 144 in Aktion und schließt die Greiferklauen 150 und 152, um eine auf dem Magazinstift 132 befindliche Wursthülle zu greifen. Anschließend wird der Greifer 82 mittels des Längsverschiebeantriebs 142 in seine ausgefahrene Position vorgeschoben und zieht dabei die leere Wursthülle 34' von dem Magazinstift 132 ab. Befindet sich die leere Wursthülle dann vor dem Magazinstift 132, tritt der Schwenkantrieb 140 in Aktion und schwenkt den Greifer 82 zum Füllrohr 26 hin, so daß er sich vor diesem befindet. Nun ist es wieder an dem Vorschubantrieb 142, den Greifer 82 in seine eingefahrene Position zurückzuziehen. Bei dieser Bewegung zieht der Greifer 82 die leere Wursthülle 34' auf das Füllrohr 26 auf. Die Greiferklauen 150 und 152 werden anschließend von dem Schließantrieb 144 geöffnet und der Greifer 82 kann in seine Ausgangsposition zurückschwenken.

In den Fig. 6 und 7 sind neben der Magaziniervorrichtung 16 auch noch zwei Füllrohre 26 und 28 eines Zwillingssystems 24 dargestellt. Fig. 6 zeigt, daß die Rotationsachse des Stiftmagazins 80 genau parallel zu dem in der Warteposition befindlichen Füllrohr 26 ausgerichtet ist. Auch die Neigung und die Höhe des Magazins sind genau so eingestellt, daß der Greifer 82 eine Wursthülle in der beschriebenen Weise auf das Füllrohr 26 aufziehen kann.

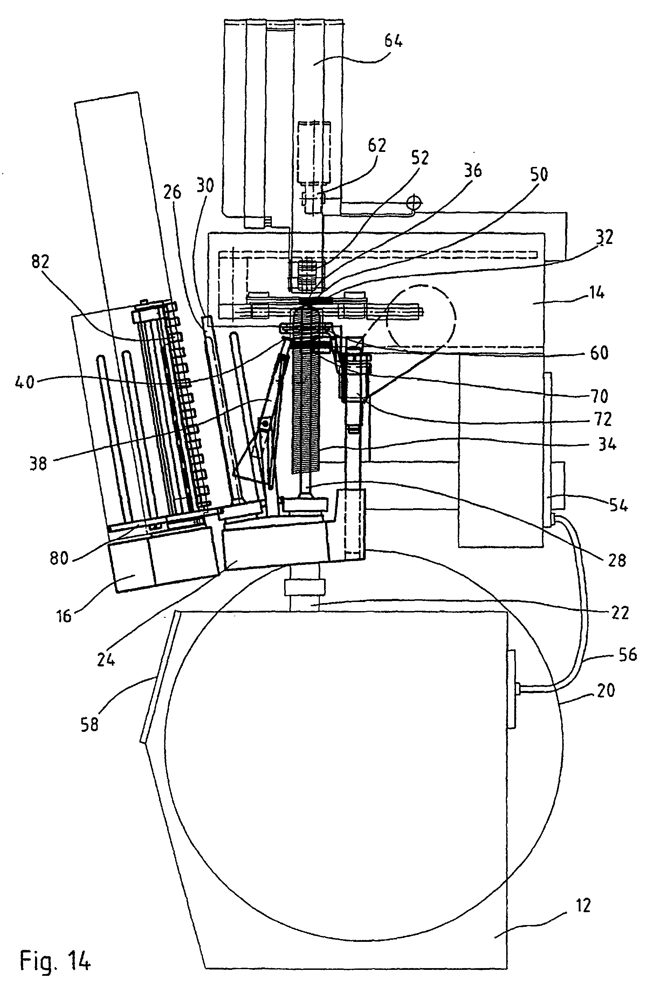

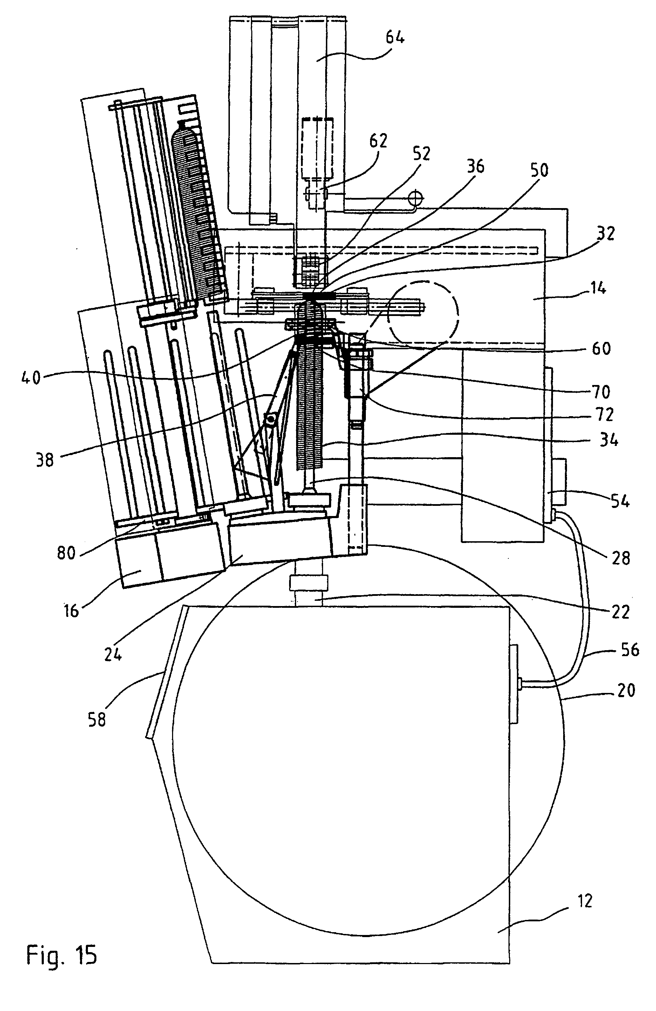

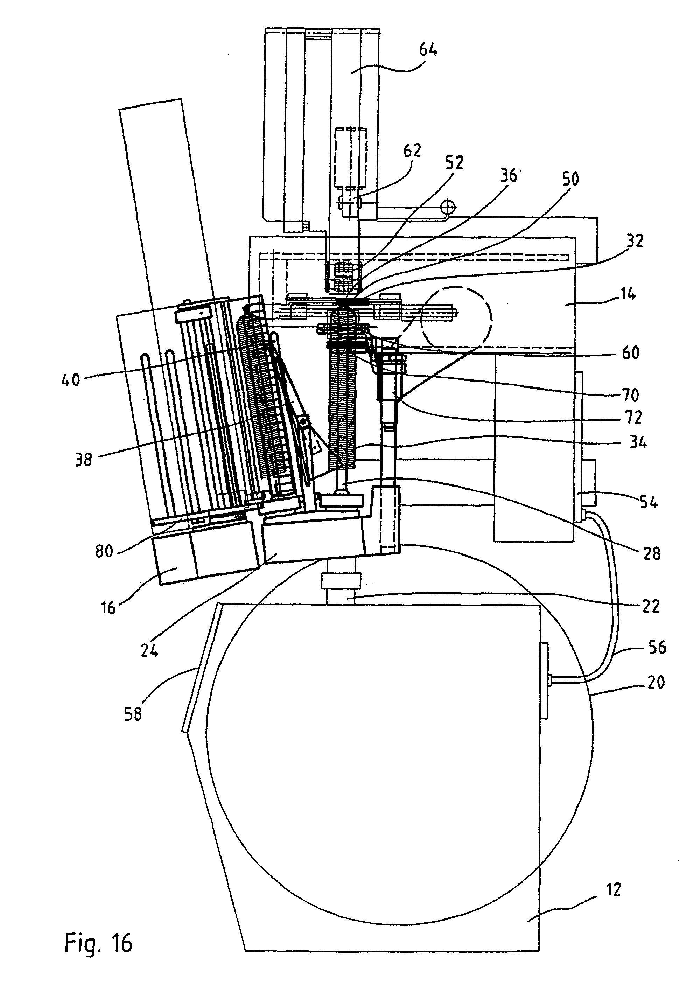

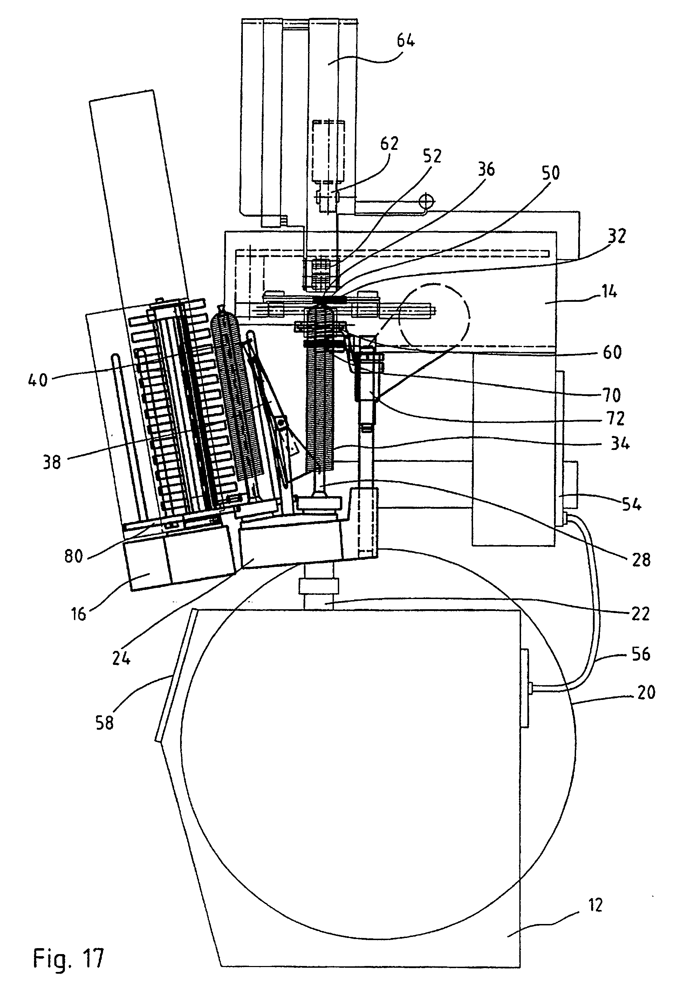

Fig. 14 bis 19 zeigen nun den vollautomatischen Austausch des unbefüllten Restes einer Wursthülle 34 auf dem in der Füllposition befindlichen Füllrohr 28 gegen eine neue unbefüllte Wursthülle. Die in den Fig. 14 bis 19 abgebildete Vorrichtung ist dabei diejenige, die bereits unter Fig. 1 beschrieben wurde. Fig. 14 bis 17 zeigen in der Draufsicht das auch in den Fig. 9 bis 13 dargestellte Verfahren, bei dem eine Wursthülle aus dem Stiftmagazin entnommen und auf das in der Warteposition befindliche Füllrohr 26 aufgezogen wird. In Fig. 14 befindet sich der Greifer 82 in seiner eingefahrenen Ausgangslage, von der aus er eine Wursthülle 34' auf demjenigen Magazinstift 132 greifen kann, der sich in der Übergabeposition befindet. In Fig. 15 hat der Greifer 82 die Wursthülle 34' bereits gegriffen, wurde vom Längsverschiebeantrieb 142 vorgeschoben und durch den Schwenkantrieb 140 bereits geschwenkt, so daß sich der geschlossene Greifer 82 mit der Wursthülle 34 vor der Mündung 30 des Füllrohres 26 befindet. Durch die vorangegangene Einstellung von Neigung und Höhe des Stiftmagazins 80 fluchten die Mittelachse des Füllrohres 26 und der Wursthülle 34' in idealer Weise genau. Daher kann der Längsverschiebeantrieb 142 den Greifer 82 zurückziehen, um die Wursthülle 34' auf das Füllrohr 26 aufzuschieben. Dieser Zustand ist in Fig. 16 dargestellt. Nachdem der Greifer 82 die Wursthülle 34' auf das Füllrohr 26 aufgeschoben hat, wird der Greifer 82 mittels des Schließantriebs 144 geöffnet und schwenkt zurück in seine Ausgangsposition in der Nähe der Übergabeposition des Stiftmagazins 80. Die frisch auf das Füllrohr 26 aufgezogene unbefüllte Wursthülle 34 wird von dem Haltearm 38 auf dem Füllrohr 26 festgehalten. Dies ist in Fig. 17 dargestellt.

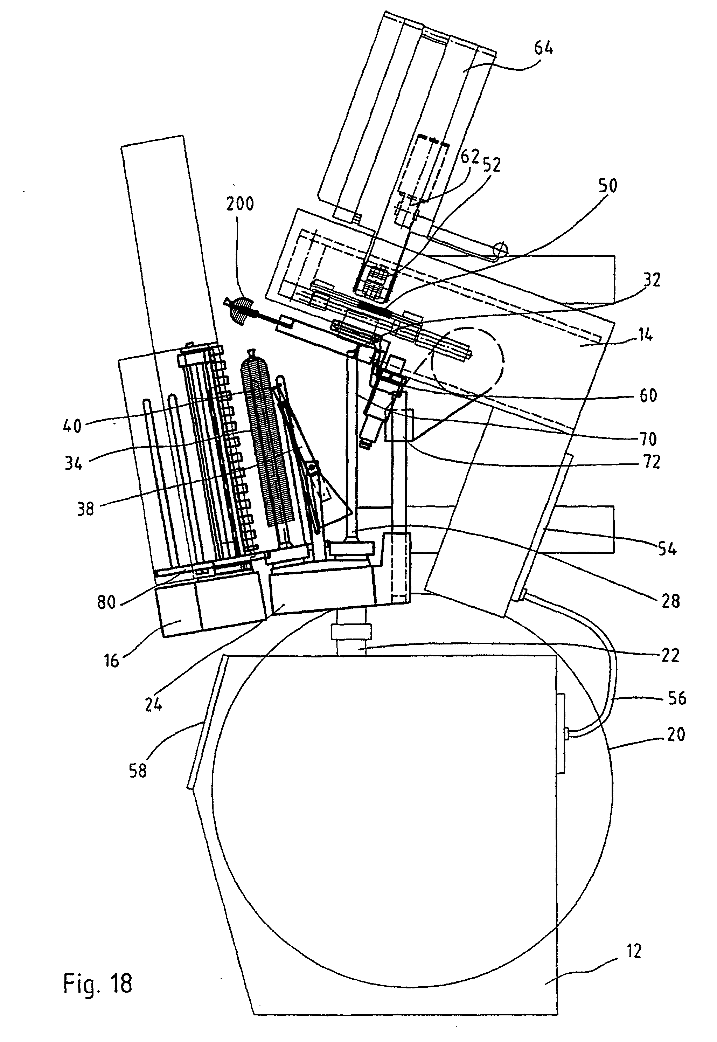

Nachdem die unbefüllte Wursthülle 34' auf das in der Warteposition befindliche Füllrohr 26 aufgezogen wurde, geschieht mit der Wursthülle 34' solange nichts, bis die Wursthülle 34 auf dem Füllrohr 28 in der Füllposition aufgebraucht ist. Sobald dies der Fall ist, wird die Verschließmaschine 14 vom Füllrohr 28 weggeschwenkt. Dadurch wird auch die Darmbremse 60 vom Füllrohr 28 abgezogen. Der Resthüllenentferner 70 befindet sich nun zwischen der Darmbremse 60 und der Mündung 32 des Füllrohres 28. Die Klemme 92 des Resthüllenentferners 70 wird geschlossen und der Resthüllenentferner 70 anschließend seitlich weggeschwenkt. Dies ist in Fig. 18 dargestellt. Anschließend wird die Klemme 92 des Resthüllenentferners 70 geöffnet und ein vom Resthüllenentferner 70 ergriffener Wursthüllenrest 200 fällt nach unten aus der nach unten geöffneten Klemme 92 des Resthüllenentferners 70 heraus. Der Resthüllenentferner 70 kann nun in seine Position neben der Darmbremse 60 zurückgeschwenkt werden. In dieser Position ist seine Klemme 92 geöffnet. Es befindet sich kein Wursthüllenrest 200 mehr in der Vorrichtung.

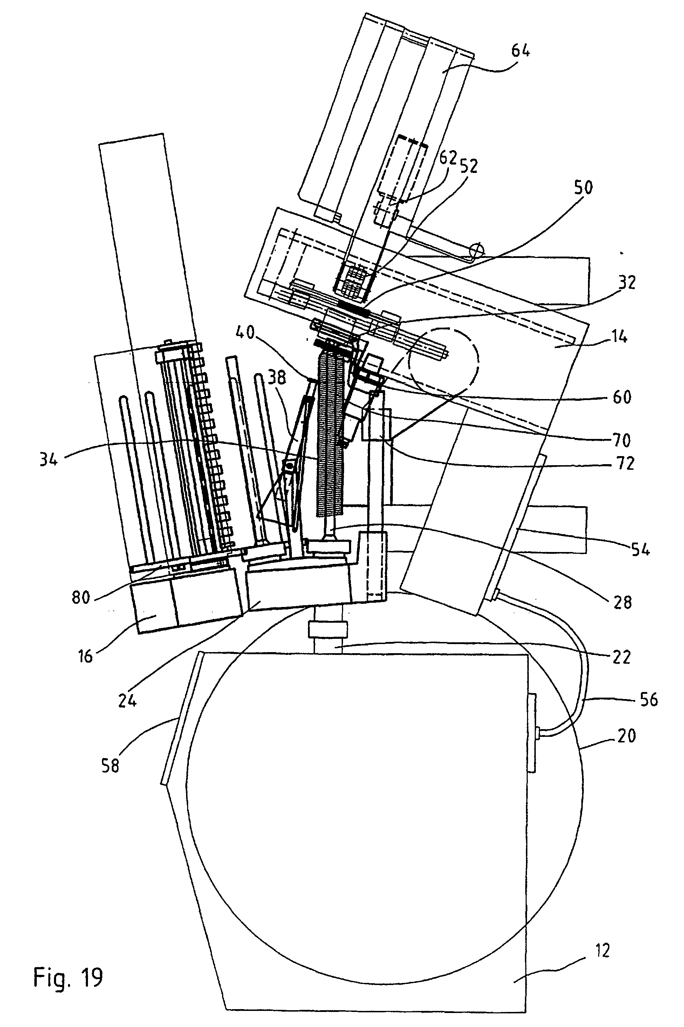

Nun wird die Position der beiden Füllrohre 26 und 28 durch Verschwenken getauscht. Die frische unbefüllte Wursthülle 34' wird auch dabei von dem Haltearm 38 festgehalten. Anschließend befindet sich das Füllrohr 26 in der Füllposition. Dies ist in Fig. 19 dargestellt. Um mit dem Befüllen der Wursthülle 34' beginnen zu können, muß schließlich noch die Verschließmaschine 14 wieder zurück an die Mündung 30 des Füllrohres 26 herangeschwenkt werden. Dabei wird gleichzeitig die Darmbremse 60 über die Wursthülle 34' auf das Füllrohr 26 aufgeschoben. Dadurch wird wieder der in Fig. 1 und Fig. 14 dargestellte Ausgangszustand hergestellt.

## Patentansprüche

1. Vorrichtung zum Herstellen von mit Füllgut befüllten Verpackungen, insbesondere Würsten, durch Befüllen und anschließendes Verschließen schlauch- oder beutelförmiger Wursthüllen, mit
- einer Füllmaschine (12), die mindestens ein Füllrohr (26, 28) mit einer Mündung (30, 32) aufweist, auf das eine Wursthülle (34) aufgezogen werden und durch das Füllgut geleitet werden kann, um die Wursthülle (34) zu befüllen,
- einer Verschließmaschine (14) zum Verschließen befüllter Wursthüllen oder Wursthüllenabschnitte, die bezogen auf den Füllgutstrom im Füllrohr (26, 28) stromab der Mündung (30, 32) des Füllrohres (26, 28) angeordnet ist,
- einem Resthüllenentferner (70) zum Entfernen des unbefüllten Restes einer Wursthülle (34) aus der Füll- und/oder der Verschließmaschine,
- einem Magazin (80) für unbefüllte Wursthüllen (34'), und
- Mittel zum Entnehmen einer unbefüllten Wursthülle (34') aus dem Magazin (80) und zum Aufziehen derselben auf das Füllrohr (26),
wobei zwischen der Verschließmaschine (14) und der Füllmaschine (12) eine Datenoder Signalleitung (56) zur Übernahme von Betriebsparametem vorgesehen ist, **gekennzeichnet durch** eine Überwachungseinrichtung (62), mit der mindestens ein Parameter einer hergestellten Verpackung wie deren Gewicht oder deren Prallheit erfaßt werden kann, und **durch** mindestens eine Steuereinrichtung (54, 58), die an die Überwachungseinrichtung (62) sowie die Füll- und/oder die Verschließmaschine (12; 14) angeschlossen und so ausgeführt ist, daß sie im Falle einer Abweichung eines oder mehrerer der von der Überwachungseinrichtung (62) erfaßten Parameter von entsprechenden Sollwerten eine Veränderung eines oder mehrerer der Betriebsparameter wie Taktzeit, Füllgewicht oder Durchmesser und Füllgeschwindigkeit der Füll- und/oder Verschließmaschine (12; 14) bewirkt oder diese abschaltet.

2. Vorrichtung nach Anspruch 1, **dadurch gekennzeichnet, dass** die Verschließmaschine (14) einen Spreizverdränger (50) und eine Clipeinrichtung (52) aufweist, deren Bewegungen in Abhängigkeit der von der Füllmaschine (12) übernommenen Betriebsparameter einzeln steuerbar sind.

3. Vorrichtung nach Anspruch 1 oder 2, **dadurch gekennzeichnet, dass** sie eine Darmbremse (60) aufweist, und dass sich der Restdarmentferner (70) in unmittelbarer Nachbarschaft zu der Darmbremse (60) befindet.

4. Vorrichtung nach Anspruch 3, **dadurch gekennzeichnet, dass** die Darmbremse (60) relativ zum Füllrohr (26, 28) derart beweglich ist, dass sie wahlweise das Füllrohr (26, 28) nahe seiner Mündung (30, 32) umschließt oder vom Füllrohr (26, 28) abgezogen ist, und dass der Restdarmentferner (70) derart angeordnet und ausgeführt ist, dass er sich bei vom Füllrohr (26, 28) abgezogener Darmbremse (60) zwischen Darmbremse (60) und Füllrohrmündung (30, 32) befindet, um dort befindliche Wursthülle (34) zu fassen und zu entfernen.

5. Vorrichtung nach Anspruch 1, **dadurch gekennzeichnet, dass** das Magazin zum Magazinieren unbefüllter Wursthüllen (34') mehrere Aufnahmen (132) für jeweils eine Wursthülle (34') aufweist.

6. Vorrichtung nach Anspruch 5, **dadurch gekennzeichnet, dass** die Aufnahmen Stäbe (132) sind, auf die die Wursthüllen (34') aufgeschoben werden können.

7. Vorrichtung nach Anspruch 5 oder 6, **dadurch gekennzeichnet, dass** die Aufnahmen (132) derart beweglich angeordnet sind, dass jede von ihnen wahlweise in eine ortsfeste Übergabeposition verfahrbar ist.

8. Vorrichtung nach Anspruch 7, **dadurch gekennzeichnet, dass** die Aufnahmen (132) an einem um eine Rotationsachse drehbaren Träger (130) so befestigt sind, dass sie parallel zu der Rotationsachse und zueinander verlaufen und sämtlich den gleichen Abstand von der Rotationsachse haben.

9. Vorrichtung nach Anspruch 8, **dadurch gekennzeichnet, dass** die Rotationsachse in Höhe und Neigung verstellbar ist.

10. Vorrichtung nach einem der Ansprüche 7 bis 9, **gekennzeichnet durch** einen steuerbaren Antrieb zum wahlweisen Verfahren der Aufnahmen (132) in die Übergabeposition.

11. Vorrichtung nach Anspruch 8 und 10, **dadurch gekennzeichnet, dass** der steuerbare Antrieb den drehbaren Träger (130) antreibt, um die Aufnahmen (132) wahlweise in die Übergabeposition zu verfahren.

12. Vorrichtung nach Anspruch 1 mit einer ein Magazin (80) nach einem der Ansprüche 5 - 11 aufweisenden Magaziniervorrichtung, **gekennzeichnet durch** eine Abgabevorrichtung (110) für Wursthüllen (34'), die Mittel zur Aufnahme einer Wursthülle an der Übergabeposition, Mittel zum Entnehmen der Wursthülle aus dem Magazin (80) und Mittel zum Abgeben der Wursthülle an eine Abgabeposition umfasst.

13. Vorrichtung nach Anspruch 12, **dadurch gekennzeichnet, dass** die Abgabevorrichtung (110) einen Greifer (82) umfasst, der in einer parallel zu den Aufnahmen (132) für die unbefüllten Wursthüllen (34') verlaufenden Richtung längsverschieblich ist und zusätzlich quer zu dieser Richtung schwenkbar ist.

14. Magaziniervorrichtung nach Anspruch 13, **gekennzeichnet durch** jeweils einen separat ansteuerbaren Antrieb (140, 142, 144) zum öffnen und Schließen des Greifers (82), zum Längsverschieben des Greifers (82) und zum Verschwenken des Greifers (82).

15. Magaziniervorrichtung nach Anspruch 14, **dadurch gekennzeichnet, dass** die drei Antriebe (140, 142, 144) des Greifers (82) so angeordnet sind, dass der Antrieb (140) zum Verschwenken des Greifers (82) die beiden übrigen Antriebe (142, 144) mitbewegt und dass der Antrieb (142) zum Längsverschieben des Greifers (82) den Antrieb (144) zum Öffnen und Schließen des Greifers (82) mitbewegt.

16. Vorrichtung nach Anspruch 1, **dadurch gekennzeichnet, dass** der Resthüllenentferner einen schwenkbaren Klemmarm (90) mit einer wahlweise zu öffnenden und zu schließenden Klemme (92) an seinem freien Ende aufweist.

17. Vorrichtung nach Anspruch 16, **dadurch gekennzeichnet, dass** die geöffnete Klemme (92) eine U-förmige Öffnung einschließt, welche in einer Schwenkstellung des Klemmarmes (90) nach unten geöffnet ist, um entfernte Wursthülle abzuwerfen.

## Claims

1. Apparatus for producing packages filled with filling product, in particular sausages, by filling and subsequently closing tubular or bag-shaped sausage casings, having
- a filling machine (12) which has at least one filling pipe (26, 28) with a mouth (30, 32), onto which pipe a sausage casing (34) can be pulled and through which filling product can be conducted in order to fill the sausage casing (34),
- a closing machine (14) for closing filled sausage casings or sausage-casing sections which are arranged, based on the flow of filling product in the filling pipe (26, 28), downstream of the mouth (30, 32) of the filling pipe (26, 28),
- a residual-casing remover (70) for removing the unfilled remains of a sausage casing (34) from the filling and/or the closing machine,
- a magazine (80) for unfilled sausage casings (34'), and
- means for removing an unfilled sausage casing (34') from the magazine (80) and for pulling the same onto the filling pipe (26),
a data or signal line (56) for receiving operating parameters being provided between the closing machine (14) and the filling machine (12), **characterized by** a monitoring device (62) with which at least one parameter of a package which has been produced, such as its weight or its fullness, can be detected, and by at least one control device (54, 58) which is connected to the monitoring device (62) and to the filling and/or closing machine (12; 14) and is designed in such a manner that, in the event of one or more of the parameters detected by the monitoring device (62) deviating from corresponding desired values, the said control device brings about a change in one or more of the operating parameters, such has cycle time, filling weight or diameter and filling speed, of the filling and/or closing machine (12; 14) or switches the latter off.

2. Apparatus according to Claim 1, **characterized in that** the closing machine (14) has a spreading displacer (50) and a clip device (52), the movements of which can be controlled individually as a function of the operating parameters received by the filling machine (12).

3. Apparatus according to Claim 1 or 2, **characterized in that** it has a casing brake (60), and **in that** the residual-gut remover (70) is situated in the direct vicinity of the casing brake (60).

4. Apparatus according to Claim 3, **characterized in that** the casing brake (60) can be moved relative to the filling pipe (26, 28) in such a manner that it optionally surrounds the filling pipe (26, 28) close to its mouth (30, 32) or is pulled away from the filling pipe (26, 28), and **in that** the residual-gut remover (70) is arranged and designed in such a manner that, with the casing brake (60) pulled away from the filling pipe (26, 28), the said remover is situated between the casing brake (60) and filling-pipe mouth (30, 32) in order to grasp and remove sausage casings (34) situated there.

5. Apparatus according to Claim 1, **characterized in that** the magazine has, for the magazining of unfilled sausage casings (34'), a plurality of receptacles (132) for one sausage casing (34') in each case.

6. Apparatus according to Claim 5, **characterized in that** the receptacles are rods (132) onto which the sausage casings (34') can be pushed.

7. Apparatus according to Claim 5 or 6, **characterized in that** the receptacles (132) are arranged moveably in such a manner that each of them can optionally be moved into a positionally fixed transfer position.

8. Apparatus according to Claim 7, **characterized in that** the receptacles (132) are fastened to a support (130), which can be rotated about an axis of rotation, in such a manner that they run parallel to the axis of rotation and to one another and all at the same distance from the axis of rotation.

9. Apparatus according to Claim 8, **characterized in that** the axis of rotation can be adjusted in height and inclination.

10. Apparatus according to one of Claims 7 to 9, **characterized by** a controllable drive for optionally moving the receptacles (132) into the transfer position.

11. Apparatus according to Claims 8 and 10,
**characterized in that** the controllable drive drives the rotatable support (130) in order to move the receptacles (132) optionally into the transfer position.

12. Apparatus according to Claim 1 having a magazining apparatus having a magazine (80) according to one of Claims 5-11, **characterized by** a discharging apparatus (110) for sausage casings (34'), which comprises means for picking up a sausage casing at the transfer position, means for removing the sausage casing from the magazine (80) and means for passing the sausage casing to a discharging position.

13. Apparatus according to Claim 12, **characterized in that** the discharging apparatus (110) comprises a gripper (82) which can be displaced longitudinally in a direction running parallel to the receptacles (132) for the unfilled sausage casings (34') and, in addition, can be pivoted transversely with respect to this direction.

14. Magazining apparatus according to Claim 13, **characterized by** a respective, separately activatable drive (140, 142, 144) for opening and closing the gripper (82), for displacing the gripper (82) longitudinally and for pivoting the gripper (82).

15. Magazining apparatus according to Claim 14, **characterized in that** the three drives (140, 142, 144) of the gripper (82) are arranged in such a manner that the drive (140) for pivoting the gripper (82) moves the two remaining drives (142, 144), and **in that** the drive (142) for displacing the gripper (82) longitudinally moves the drive (144) for opening and closing the gripper (82).

16. Apparatus according to Claim 1, **characterized in that** the residual-casing remover has a pivotable clamping arm (90) with a clamp (92), which is to be alternately opened and closed, at its free end.

17. Apparatus according to Claim 16, **characterized in that** the opened clamp (92) encloses a U-shaped opening which is opened downwards in a pivoting position of the clamping arm (90) in order to eject removed sausage casing.

## Revendications

1. Dispositif pour la fabrication d'emballages remplis avec une matière de remplissage, en particulier de saucisses, par remplissage et fermeture ultérieure de membranes pour saucisse en forme de boyau ou de sachet, équipé :
- d'une machine à remplir (12) qui comprend au moins un tuyau de remplissage (26, 28) muni d'une embouchure (30, 32), sur laquelle une membrane pour saucisse (34) peut être appliquée et par laquelle la matière de remplissage peut être acheminée afin de remplir la membrane pour saucisse (34),
- d'une machine à fermer (14) pour la fermeture de membranes pour saucisse ou de segments de membrane pour saucisse remplis, qui, par rapport au flux de matière de remplissage dans le tuyau de remplissage (26,28), est disposée en amont de l'embouchure (30, 32) du tuyau de remplissage (26, 28),
- d'un dispositif d'élimination de la membrane résiduelle (70) pour l'élimination du résidu non rempli d'une membrane pour saucisse (34) hors de la machine à remplir et / ou à fermer,
- d'un magasin (80) pour membranes pour saucisse non remplies (34'), et
- d'un organe de retrait d'une membrane pour saucisse non remplie (34') hors du magasin (80) et d'application de cette même membrane sur le tuyau de remplissage (26),
moyennant quoi une ligne de transmission de données ou de signaux (56) est prévue entre la machine à fermer (14) et la machine à remplir (12) pour le recueil de paramètres opératoires, **caractérisé par** une installation de surveillance (62) au moyen de laquelle il est possible d'enregistrer au moins un paramètre d'un emballage produit, tel que son poids ou sa plénitude, et par au moins une installation de commande (54, 58) qui est raccordée à l'installation de surveillance (62) ainsi qu'à la machine à remplir et / ou à fermer (12 ; 14) et réalisée de telle sorte que, dans le cas d'un écart d'un ou de plusieurs paramètres enregistrés par l'installation de surveillance (62) par rapport aux valeurs de référence correspondantes, elle entraîne une modification de l'un ou de plusieurs des paramètres opératoires, tels que le temps du cycle, le poids de remplissage ou le diamètre et la vitesse de remplissage, de la machine à remplir et / ou à fermer (12 ; 14) ou arrête cette dernière.

2. Dispositif selon la revendication 1, **caractérisé en ce que** la machine à fermer (14) comporte un dispositif de resserrement (50) et une installation d'agrafage (52) dont les mouvements peuvent être commandés séparément en fonction des paramètres opératoires recueillis par la machine à remplir (12).

3. Dispositif selon la revendication 1 ou 2, **caractérisé en ce qu'**il présente un frein à boyau (60) et **en ce que** le dispositif d'élimination du boyau résiduel (70) se trouve à proximité directe du frein à boyau (60).

4. Dispositif selon la revendication 3, caractèrisé en ce que le frein à boyau (60) peut être déplacé par rapport au tuyau de remplissage (26, 28) de telle sorte qu'il entoure au choix le tuyau de remplissage (26, 28), près de son embouchure (30, 32), ou est retiré du tuyau de remplissage (26, 28) et en ce que le dispositif d'élimination du boyau résiduel (70) est disposé et réalisé de telle sorte qu'il se trouve, lorsque le frein à boyau (60) est retiré du tuyau de remplissage (26, 28), entre le frein à boyau (60) et l'embouchure du tuyau de remplissage (30, 32) afin de saisir et d'enlever la membrane pour saucisse (34) qui s'y trouve.

5. Dispositif selon la revendication 1, **caractérisé en ce que** le magasin de stockage de membranes pour saucisse non remplies (34') comporte plusieurs réceptacles (132) pour, respectivement, une membrane pour saucisse (34').

6. Dispositif selon la revendication 5, **caractérisé en ce que** les réceptacles sont des tiges (132) sur lesquelles les membranes pour saucisse (34') peuvent être enfilées.

7. Dispositif selon la revendication 5 ou 6, **caractérisé en ce que** les réceptacles (132) sont disposés de manière mobile de sorte que chacun d'entre eux peut être amené, au choix, dans une position de transfert stationnaire.

8. Dispositif selon la revendication 7, **caractérisé en ce que** les réceptacles (132) sont fixés sur un support (130) orientable autour d'un axe de rotation de sorte qu'ils s'étendent de manière parallèle à l'axe de rotation et les uns par rapport aux autres et sont tous à la même distance de l'axe de rotation.

9. Dispositif selon la revendication 8, **caractérisé en ce que** la hauteur et l'inclinaison de l'axe de rotation sont ajustables.

10. Dispositif selon l'une quelconque des revendications 7 à 9, **caractérisé par** un entraînement manoeuvrable destiné à amener, au choix, les réceptacles (132) en position de transfert.

11. Dispositif selon les revendications 8 et 10, **caractérisé en ce que** l'entraînement manoeuvrable actionne le support orientable (130) afin d'amener les réceptacles (132), au choix, en position de transfert.

12. Dispositif selon la revendication 1, muni d'un dispositif de stockage comportant un magasin (80) selon l'une quelconque des revendications 5 à 11, **caractérisé par** un dispositif distribution (110), pour les membranes pour saucisse (34'), qui comprend un organe de réception d'une membrane pour saucisse en position de transfert, un organe de retrait de la membrane pour saucisse du magasin (80) et un organe de distribution de la membrane pour saucisse à une position de distribution.

13. Dispositif selon la revendication 12, **caractérisé en ce que** le dispositif de distribution (110) comprend une pince (82) que l'on peut déplacer longitudinalement dans une direction s'étendant parallèlement aux réceptacles (132) pour les membranes pour saucisse non remplies (34') et, en outre, basculer perpendiculairement à cette direction.

14. Dispositif de stockage selon la revendication 13, **caractérisé par**, respectivement, un entraînement manoeuvrable séparément (140, 142, 144) pour l'ouverture et la fermeture de la pince (82), pour le déplacement longitudinal de la pince (82) et pour le basculement de la pince (82).

15. Dispositif de stockage selon la revendication 14, **caractérisé en ce que** les trois entraînements (140, 142, 144) de la pince (82) sont disposés de telle sorte que l'entraînement (140), pour le basculement de la pince (82), déplace également les deux autres entraînements (142, 144) et que l'entraînement (142), pour le déplacement longitudinal de la pince (82), déplace également l'entraînement (144) pour l'ouverture et la fermeture de la pince (82).

16. Dispositif selon la revendication 1, **caractérisé en ce que** le dispositif d'élimination de la membrane résiduelle comporte, sur son extrémité libre, un bras de serrage pivotant (90) muni d'une mâchoire (92) que l'on peut ouvrir ou fermer, au choix.

17. Dispositif selon la revendication 16, **caractérisé en ce que** la mâchoire (92) ouverte comprend un orifice en U qui est ouvert vers le bas, dans une position inclinée du bras de serrage (90), afin d'éjecter la membrane pour saucisse retirée.
